# EUROPEAN PATENT SPECIFICATION

(11) **EP 2 555 471 B1**
(45) Date of publication and mention of the grant of the patent: **26.03.2014**
(21) Application number: 12004494.6
(22) Date of filing: 14.06.2012
(51) Int. Cl.: H04L 12/26

(54) **Information distribution system and information management device**
Informationsverteilungssystem und Informationsverwaltungsvorrichtung
Système de distribution d'informations et dispositif de gestion d'informations

(30) Priority: 26.07.2011 JP 2011163506
(43) Date of publication of application: 06.02.2013
(73) Proprietor: Hitachi, Ltd., Tokyo 100-8280 (JP)
(72) Inventor: Mizutani, Masahiko, Tokyo 100-8220 (JP); Kanno, Takayuki, Tokyo 100-8220 (JP)
(74) Representative: Strehl Schübel-Hopf & Partner

(56) References cited:
- US-A1- 2005 270 982
- US-A1- 2008 005 354
- US-A1- 2011 128 885
- US-A1- 2011 141 899

## Description

### FIELD OF THE INVENTION

The present invention relates to a communication system including an asynchronous data communication-type communication network in which data and control signals are transmitted and received using a packet format, users can access a service providing server using different communication paths, and a difference in the signal transmission time between users due to the different communication paths and instability in the time required for communications that is a characteristic of a best-effort communication system are reduced. In addition, the present invention relates to a communication management device configuring the communication system. Specifically, the present invention relates to a communication system and a communication management device that unify the time at which information is provided for users who receive communication services from the viewpoint of fairness of services. In addition, the present invention relates to a communication system and a communication management device having a function of managing the transmission time of a signal from a user and the arrival time of a signal from a user at a service provider to eliminate unfair factors caused by communication environments (for example, the lengths of communication paths, crowding of communication devices, and the like) of users when determining the priority of processing a service request signal for a service operator from a user and determining whether or not to provide the service.

### BACKGROUND OF THE INVENTION

Access lines for users have been changed to high-capacity access lines using optical fibers, and environments where many users can use the Internet through high-speed communication lines such as optical fibers have been established. A Passive Optical Network (PON) system that seems to be advantageous in the costs of facilities and maintenance management has been widely used in current access line services.

On the other hand, Asynshronous Transfer Mode (ATM) or Synchronous Digital Hierarchy (SDH) lines are currently mainly used for access lines accommodating the PON. These lines employ a line switching system in which a communication path is fixedly allocated in a certain period of time from the start to the end of communications. In the line switching, devices configuring a communication path refer to the same reference clock, so that the entire communication network operates in synchronization with the same clock, and a signal input to the communication path is added to a network synchronization clock via lines between the communication devices to be transmitted to a destination device. ATM and SDH devices refer to a high-accuracy synchronization clock to unify the timing of signal processing performed in each device, and communication signals are always transmitted at a certain period of time between the start and end points of the communication path.

With an increase in the volume of communication data, a more highly-efficient data transmission technique has been needed. Thus, attention has been paid to a packet communication technique for transmitting and receiving each data using a format called a packet or frame in order to improve the communication performance by enhancing the data multiplex on a communication path. Typical communication protocols used in packet communications are Ethernet and Multi Protocol Label Switching (MPLS), and MPLS-Transport Profile (MPLS-TP). In the packet communication technique, it is not necessary to synchronize the operation clock between communication devices unlike ATM and SDH, and each transmitter transmits and receives a signal to/from a receiver at predetermined timing. The packet communication technique is an efficient multiplexing technique that consumes line bandwidths only when communication signals (packets) exist. On the other hand, the transmission time required from a start point to an end point of a path is not always constant in the packet communication technique due to a difference in the processing time (processing performance and buffer amounts) in each communication device and a difference in the processing priority of a reception signal.

Today, communication networks including the Internet, broadcasts, and telephones are characterized as the social infrastructure, and not only information distribution using Web pages as media, but also various services are provided through communication networks. For information providing services such as Web pages, demand for bandwidths is expected to be dramatically increased in response to designing of the superhigh-definition standard and spread of digital broadcasts. In the meantime, for example, interactive services not only between users but also between users and systems (servers) are widely used along with improvement in reliability of communication networks, and environments where a sophisticated function such as changing the display in accordance with selection by a user are currently established. Auctions on the Internet, communication games in which virtual reality can be simulated, and commercial trading (especially, settlement process) via a network are examples of the services. Introduction of the information technology into social activities in the administration, finance, and electronic trading boosts convenience. At the same time, an advanced security technique is required for communication and server techniques to avoid information leaks. The encryption technology of communication data has been a main subject of research in the security technique, and a technique of avoiding information leaks and illicit behavior in many commercial services has been studied.

In the Internet commercial trading (stock and exchange trading and the like), it is pointed out that a difference in the communication time possibly undermines the fairness between users. Unfairness caused by the communication time is an unignorable issue not only in a wide-area packet communication network, but also in a LAN of a data center managed by a service provider. Specifically, in communications between a server of a securities company installed in a data center and a central processing server that aggregates data from each securities company, a securities company whose server is located nearer the central processing server is advantageous because the securities company can deal prior to other companies. The difference in the communication time caused by the difference in the line length is an important issue for securities companies to secure the quality of services for customers.

A delay in the communication time in Internet auctions and stock and exchange trading is a crucial factor of deterioration in service quality (reliability) and decline in competitiveness of companies, and is a problem to be solved in establishing the social infrastructure.

In the case where a communication section includes a packet communication network, there is no guarantee that the end-to-end communication time becomes constant. Specifically, the transmission time of each packet differs depending on crowding in the communication network and the performance of a device, or variations in the processing delay time in a device caused by a difference in the processing priority of each packet.

In a communication system in which there are plural users who request a specific service from a specific service provider, the request for the service from each user is identified on the basis of transmission information including the arrival time at a server in the service provider, and the priority of providing the service is allocated or user identification is performed, when a service request signal issued by a user passes through a packet communication network as an asynchronous communication section, fluctuation (especially, expansion of delay time) in the time required for communications that is unintended by the user occurs under the influence of crowding or path troubles in the packet communication network or settings of the packet processing priority by operators of the packet communication network, so that there is a possibility that fairness between users cannot be secured in a server process relevant to provision of services.

According to Japanese Patent Application Laid-Open No. 2002-141946, the following means is disclosed to solve the above-described problem. In a storage system composed of plural host computers and a storage control device, a switch that relays a signal issued from each host computer to the storage control device gives time information to the signal.

US 2011/0128885 A1 discloses a communication system having a device which includes ingress and egress ports to capture network traffic, modify captured data packets and communicate modified data packets to external devices. The modification may include the insertion of a time stamp into the data packet, the time stamp indicating the arrival time of the data packet at the device.

US 2008/0005354 A1 discloses time stamping of data packets for analysis of the latency of a communication system.

US 2011/0141899 A1 discloses a communication system which can monitor a transfer delay by use of an Operation, Administration and Maintenance packet.

Time stamping of date packets is also disclosed by US 2005/0270982 A1.

### SUMMARY OF THE INVENTION

Other than request signals from plural information terminals to a server, the following three functions are necessary in electronic trading: (1) the time of providing information from the server to all users is unified as much as possible; (2) information that is changing every minute is continuously distributed as needed; and (3) a service is quickly provided for an action or request of each user for information that is changing.

An object of the present invention is to provide a communication system by which uncertainty of communication conditions in a packet communication network can be suppressed, external information such as market information can be distributed without delay, and information can be transmitted in real time from a user to a market.

This object is solved by a communication system in accordance with claim 1. The dependent claims are directed to preferred embodiments of the invention.

A communication network in which communication devices configuring a signal transport network can identify the exact time is configured, and a nanosecond-order time setting error between the communication devices is assumed. For a user signal (signal requesting for provision of services) input to the signal transport network, header information for transmission in the signal transport network is given at a portal edge of the signal transport network on the user side. The information given at this time includes a time stamp indicating the time of receiving the user signal by the edge.

In a server on the service provider side, the time stamp is referred to, and services are provided for each user. Specifically, a response process schedule for each user is produced from the time stamp, and waiting time is reduced and a priority process is performed in accordance with the time of issuing the request by the user. The services include information distribution, reservation of tickets, purchase of goods, exchange trading, and the like.

In order to eliminate a differentiator unintended by a user in a packet communication network, the time of receiving a trading request from a user is recorded at an inlet port of a signal transport network located nearer the user, and the information is transmitted to a server owned by a securities company and a central processing server. Further, the time of distributing information from the server to the user is unified or controlled depending on services in the same device. Accordingly, it is possible to prevent a time stamp from being incorrectly input or dealt by a user, and fairness can be secured without consideration of a difference in the transmission time of signals on lines.

In commercial trading via the Internet, it is possible to access trading markets in each country. However, it is necessary to accept a certain delay in information transmission. The delay is inevitable in a communication network in which data is transmitted and received via plural communication devices that process electric signals. On the other hand, a difference in the communication time between (local) users and between commercial trading servers can be adjusted in time shorter than a certain communication delay by the present invention. Accordingly, fair trading environments can be provided for individual and corporate users managed by a service provider or a data center. Specifically, up-to-date information can be provided for users without delay, users can obtain market information at the same time, and reactions on the basis of the discretion of each user can be reflected on a market in real time.

### BRIEF DESCRIPTION OF THE DRAWINGS

Preferred embodiments of the present invention will now be described in conjunction with the accompanying drawings, in which;
FIG. 1 shows a block diagram for explaining a configuration of a communication system;
FIG. 2 shows a block diagram for explaining a detailed configuration of a data center;
FIG. 3 shows a functional block diagram for explaining a configuration of an information management device;
FIG. 4 shows a flowchart for explaining a flow of processes in an input frame processing unit of the information management device;
FIG. 5 shows a flowchart for showing a processing procedure to determine whether or not to accept an uplink signal in the input frame processing unit of the information management device;
FIG. 6 shows a sequence diagram for showing a flow of data processing;
FIG. 7 shows a sequence diagram for showing a flow of processes relevant to an uplink signal transmitted from a user terminal to a trade server;
FIG. 8 shows a sequence diagram for showing a measurement procedure of the allowable delay time in a central trade server;
FIG. 9 shows a diagram for explaining a relation between the communication delay time between the central trade servers and the signal arrival at each user terminal;
FIG. 10 shows a format of a delay measurement frame used when the trade server measures the communication time with the user terminal;
FIG. 11 shows a format of a downlink signal for notifying the trade server or an NE of the waiting time when distributing information or the allowable delay time of a response to distributed information;
FIG. 12 shows a format in the case where a delay measurement signal and an expire time notification signal are configured using an Ethernet frame format; and
FIG. 13 shows a format in the case where the delay measurement signal and the expire time notification signal are configured using an MPLS frame format.

### DETAILED DESCRIPTION OF THE EMBODIMENT

Hereinafter, a mode for carrying out the present invention will be described in detail using an embodiment while referring to the drawings. It should be noted that substantially the same constitutional elements are given the same reference numerals, and the explanations thereof will not be repeated.

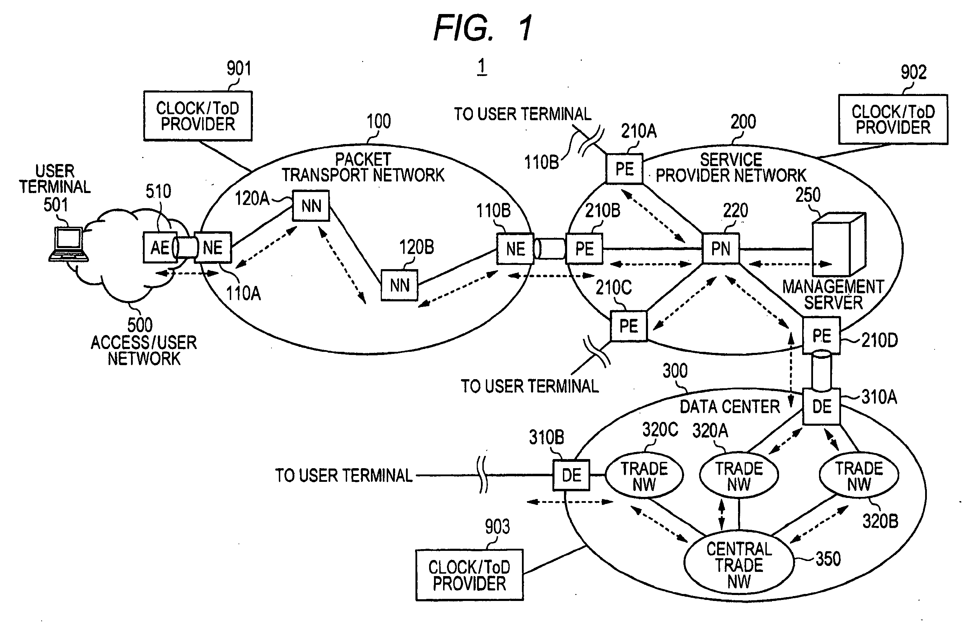

A configuration of a communication system will be described with reference to FIG. 1. In FIG. 1, a communication system 1 includes a user terminal 501, a user network/access network 500, a packet transport network 100, a service provider network 200, a data center 300, and clock/ToD providers 901 to 903. The user network/access network 500 includes an Access Edge (AE) 510. The packet transport network 100 includes Network Edges (NEs) 110 and Network Nodes (NNs) 120. The service provider network 200 includes Provider Edges (PEs) 210, a Provider Node (PN) 220, and a management server 250. The data center 300 includes Data Center Edges (DEs) 310, trade networks 320, and a central trade network 350. It should be noted that the solid lines between the devices or between the devices and the networks denote paths of main signals and the dashed bidirectional arrows denote transmission and reception of synchronization signals.

The communication system 1 distributes information to users via a communication network, and provides necessary information services on the basis of user requests. Distribution information and auxiliary information necessary for providing services are stored in the data center 300. The data center 300 is connected to the user terminal 501 via the service provider network 200 and the packet transport network 100. In general, the user terminal 501 is connected to the packet transport network 100 via a household or corporate intranet. Further, a user accommodation network referred to as an access network or an access line is used to connect the intranet to the packet transport network in many cases.

In the description using FIG. 1 and the like, the intranet and the access network are collectively referred to as the user network 500.

In a general configuration of a communication network, the user terminal 501 as a business user is connected to a Local Area Network (LAN) in a corporate site. On the other hand, the user terminal 501 as an individual user is connected to an in-home LAN. In order to establish a connection from a LAN to the Internet in recent years, the user terminal is connected to a bureau office building of a telecommunications carrier via a Passive Optical Network (PON), and then is connected to a communication network and a data center (a service provider LAN for accommodating plural servers) managed by a service provider via a signal transport network provided by the telecommunications carrier. To be exact, the service provider that provides the communication network is different from the service (content) provider that provides information contents in some cases. However, the different between the configurations is not relevant to the embodiment, and thus the embodiment will be described while referring the both as a service provider on the assumption of a signal organization.

The DE 310A and the PE 210D are installed at a connection point between the data center 300 and the service provider network 200 to communicate with each other. As similar to the above, the PE 210B and the NE 110B are installed to connect the service provider network 200 and the packet transport network 100 to each other. Further, the NE 110A and the AE 510 are used to connect the packet transport network 100 and the user network 500 to each other. With the above-described configuration, communication paths between the user network 500 and the data center 300 can be established. Plural DEs 310, PEs 210, NEs 110, and AEs 510 are generally installed in the communication networks (depending on the number of carriers to be connected).

The packet transport network 100 serves to relay transmission and reception of signals between the user network 500 and the service provider network 200. In the packet transport network 100, a communication protocol used to transmit information from the NE 110A to the NE 110B may be the same as or different from that used in the user network or the service provider network. The communication devices NNs 120A and 120B configure a communication path between the NEs 110A and 110B.

The communication device PN 220 in the service provider network 200 allows the PE 210B and the PE 210D to be connected to each other. Further, the communication device PN 220 allows plural PEs including the PE 210A and PE 210C to be connected to each other. In FIG. 1, only the PN 220 is illustrated in order to simply show the concept. However, the PEs 210 are generally connected to each other via plural PNs 220. Each of the PEs 210A and 210C is connected to the user network via the packet transport network 100 or another. The PE 210 is directly connected to the AE 510 in a network configuration of a certain service provider. However, the present invention can be similarly implemented in such a case.

Further, the service provider network 200 includes the management server 250 for user management. The management server 250 provides an authentication function to determine whether or not the user 501 can use the communication path. The service provider network 200 provides communication environments via the AE 510, NE 110A, NE 110B, and PE 210B for a user who has been authorized to use the communication path by the management server 250. The user terminal 501 can access the data center 300 and other information sites on the Internet via the path (namely, the service provider network 200).

The data center 300 includes plural information processing networks (hereinafter, referred to as trade networks) 320A to 320C. Further, there exists an information management network (hereinafter, referred to as a central trade network) 350 that aggregates and processes information from these trade networks 320. The central trade network 350 integrally manages market information in the data center 300. The central trade network 350 aggregates trade information of the market in which the central trade network 350 is included and user requests (buying and selling requests for stocks, exchange, or other products) aggregated by the trade networks 320A and 320C. On the other hand, the central trade network 350 establishes the entire conditions of the area and market information of another area in a server, or obtains the same from another server to be distributed to the trade networks 320A and 320C. Followings are typical configuration examples of the data center 300: (A) the trade networks 320A to 320C are private areas of banks or securities companies to manage information distribution to contract users and trade information for each user, and the central trade network 350 is an area controlled by a stock exchange existing in a large city; and (B) pre-bid processes are performed in the trade networks 320A to 320C for deconcentration of load on a reception server or user management by regions when making a bid for an auction, and post-bid processes and integrated management of auction information are performed in the central trade network 350.

The trade networks 320 and the central trade network 350 are connected to an external communication network via the DE 310A or DE 310B. Although not illustrated in FIG. 1, the DE 310B is also connected to the user terminal via another provider network or communication carrier network.

The data center 300 may be connected to only a specific service provider network 200 or plural service provider networks. Further, the packet transport network 100 and the data center 300 may be directly connected to each other. Telecommunication carriers are involved in a wide range of businesses. Specifically, configurations of communication networks through which user signals pass when performing commercial trading differ depending on communication carriers or ISPs. As typical examples, there are business operators (namely, transmission network carriers) that lease a right to use communication lines to communication providers, communication providers that provide end users with connection environments to the Internet by using communication lines of business operators, and data centers that store and manage information for a specific communication provider or plural communication providers. Some corporate users establish their own data centers to be used for provision/distribution/sharing of information from the headquarters or branch offices. In recent years, contents providers (referred to as service providers in a broad sense) that manage contents using servers installed in data centers and manage distribution of the contents and an access right to each content have started various businesses. Due to the involvement of various business operators, there is a wide variety of communication topologies. Specifically, FIG. 1 shows a typical configuration of a communication network, and can be applied to a communication network having a different configuration.

The example of the configuration is **characterized in that** the data center 300, the service provider network 200, the packet transport network 100, and the access network 500 (at least the edge of the packet transport network 100 on the user terminal 501-side or the edge 510 of the access network 500) manage the same standard time. The clock synchronization and standard time distribution technique of a GPS, NTP, IEEE1588, and the like have been widely used, and it has been relatively easy to synchronize from the user terminal 501 (the vicinity of the user terminal 501) as a client to the inside of the data center 300 as shown in the drawing. In the drawing, the clock/ToD (Time of Day) providers 903, 902, and 901 are provided for the data center 300, the service provider network 200, and the packet transport network 100, respectively. Further, the networks are connected to each other via the edges. The AE 510, NE 110B, and PE 210D are synchronized with the NE 110A, PE210B, and DE310A, respectively, by transmitting synchronization control signals other than main signals (data frames) to each other. In FIG. 1, communication conditions of the synchronization control signals are represented by dashed arrows. Intercommunications of synchronization control frames realizes synchronization of the entire communication system 1 with the smaller number of clock/ToD providers.

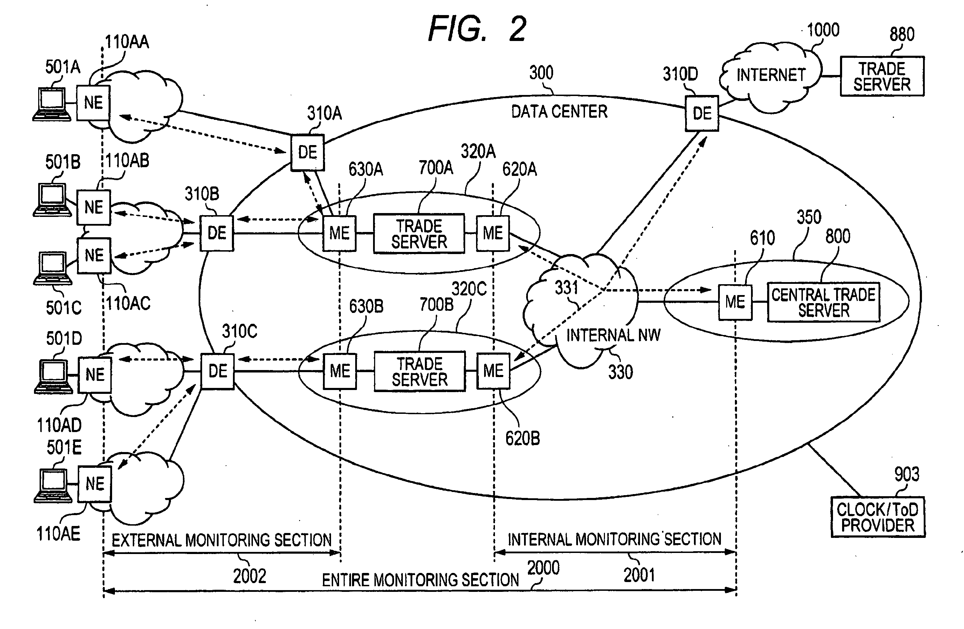

With reference to FIG. 2, the data center 300 will be described in detail. In FIG. 2, plural trade networks 320A to 320C exist in the data center 300 as described using FIG. 1. Among these trade networks 320, FIG. 2 illustrates the trade networks 320A and 320C (the trade network 320B of FIG. 1 is omitted) with different destinations DEs. The data center 300 includes the central trade network 350, and further includes an internal communication network 330 to connect the central trade network 350 to the trade networks 320 or the DEs 310. Connection relations between user terminals 501A to 501E and NEs 110AA to 110AE have already been described in FIG. 1, and the explanations thereof will not be repeated. The trade networks 320A and 320C and the central trade network 350 include trade servers 700A and 700B, and a central trade server 800, respectively.

The trade networks 320A and 320C include Management Equipment (ME) 620A/ME 630A and ME 620B/ME 630B, respectively, that manage and control the processing time of downlink signals such as information distribution and uplink signals such as user requests. The central trade network 350 includes ME 610. With the use of these pieces of ME, the communication system 1 can be divided into an entire monitoring section 2000, an internal monitoring section 2001, and an external monitoring section 2002 in terms of signal processing time management/control.

The ME 610, ME 620A and ME 620B are connected to each other via the internal communication network 330. By arranging the ME 610 and ME 620A(B) at the both ends of the internal communication network 330, the fluctuation of the data processing time in the internal communication network 330 is absorbed in the course of signal processing in the ME 610 and ME 620A(B), and the communication time between the trade networks 320A and 320C and the central trade network 350 is kept constant. The internal communication network 330 allows the DE 310D to be connected to the ME 610, ME 620A and ME 620B. The DE 310D is connected to a central trade network (a trade server 880 installed therein) installed at a distant point via the Internet 1000. The communication devices installed in the data center 300 receive clock information or standard time information supplied from the clock/ToD provider 903 to perform signal processing while being synchronized in the data center 300. Therefore, the internal communication network 330 also serves as a distribution path of synchronization signals for the devices (DE 310D, ME 610, and ME 620) that are connected to each other via the internal communication network 330.

It should be noted that all the devices in the data center 300 operate in accordance with the same standard time by using the clock synchronization and standard time distribution technique of a GPS, NTP, IEEE1588, and the like. Further, in an environment where a protocol such as IEEE1588v2 can be used, time synchronization can be realized with a higher degree of accuracy. Specifically, more advanced time control is performed by setting all the devices so as to operate in accordance with the standard clock.

Provision of the signal processing time managing function can keep constant the time required from the signal transmission time to the reception (acceptance) confirmation time in the communications between the trade servers 700A and 700B and the central trade server 800, and thus instability in transmission and reception of signals in the internal monitoring section 2001 can be avoided.

The user terminals 501 mutually communicate information with the trade servers 700A and 700B in which the user terminals 501 are accommodated. In FIG. 2, correspondence (service contract) relations between the user terminals 501A to 501E and the trade servers 700A and 700B are illustrated in a simplified manner. In practice, the user terminals are connected to the data center 300 via the packet transport network 100 and the service provider network 200 as shown in FIG. 1, and thus there are no restrictions by the physical topology at all. The trade networks 320A and 320C include the ME 630A and ME 630B, respectively, on the sides of the user terminals 501 relative to the trade servers 700A and 700B. Each of the trade servers 700 may be connected to the ME by a direct connecting method between the devices as shown in the drawing, or via a path having plural transport sections. A communication section with the NEs 110AA to 110AE accommodating the user terminals 501A to 501E and the ME 630A and ME 630B using as both ends corresponds to the external monitoring section 2002. In this case, each of the NEs 110AA to 110AE is a communication device corresponding to the NE 110A or AE 510 illustrated in FIG. 1. The arrangement of the devices is largely dependent on the business model of each communication carrier and provider, and thus the NEs 110A are used as an end point of the external monitoring section 2002 in this case. However, concrete arrangement is not limited to the above. Specifically, if the AE 510 and the NE 110A operate in synchronization with each other as shown in FIG. 1, the AE510 functions as similar to the above. An important point is that an administrator other than the owner of the user terminal 501 exists. Specifically, arbitrary settings of the signal transmission time by a user are regarded as invalid by operating the communication device (management device) NE 110A to achieve fairness among users. An adjusting method of the time required for communications in the external monitoring section 2002 by cooperation of the NE 110A and ME 630 is substantially the same as the operation in the internal monitoring section 2001.

As similar to FIG. 1, communication conditions of the synchronization control signals are represented by dashed arrows. Intercommunications of synchronization control frames realizes synchronization of the entire communication system with the smaller number of clock/ToD providers.

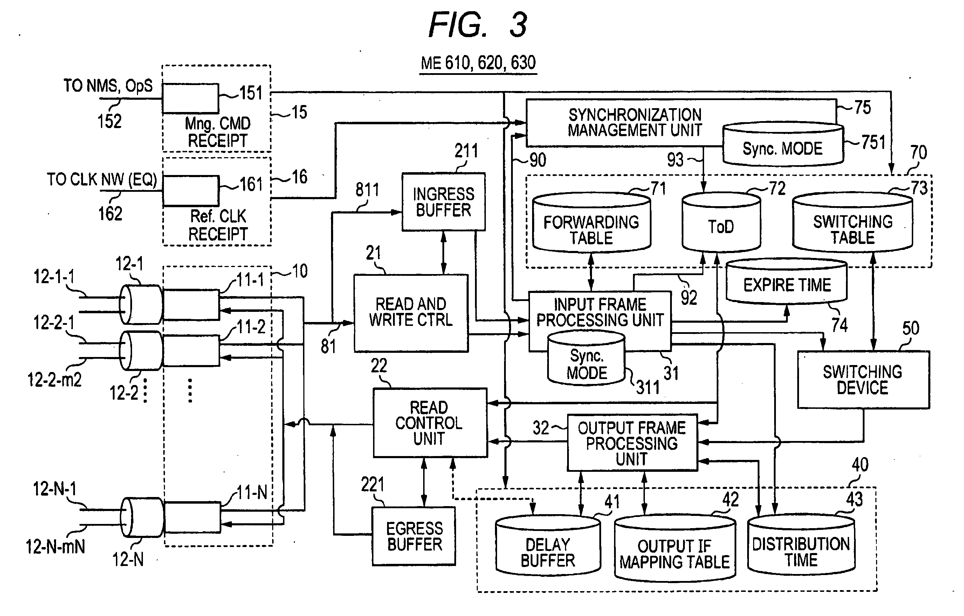

With reference to FIG. 3, a configuration of the management equipment ME will be described. It should be noted that the functional blocks of the ME 610, ME 620, and ME 630 are the same, and thus the ME 610 will be described in the embodiment. In FIG. 3, the ME 610 includes an interface unit 10, a management command reception unit 15, a reference clock reception unit 16, an input/output management unit 21, a read control unit 22, an input frame processing unit 31, an output frame processing unit 32, a database unit 40, a switching device 50, an in-equipment database unit 70, a synchronization management unit 75, an ingress buffer 211, and an egress buffer 221.

The interface unit 10 includes N interfaces 11. The management command reception unit 15 includes a management command reception interface 151. The reference clock reception unit 16 includes a reference clock reception interface 161. The input frame processing unit 31 includes a synchronization mode database 311. The database unit 40 holds a delay buffer 41, an output interface mapping table 42, and a distribution time database 43. The in-equipment database unit 70 holds a forwarding table 71, time information (ToD database) 72, a path switching table 73, and an expire time database 74. The synchronization management unit 75 includes a synchronization mode database 751.

A control line 152 is connected to the management command reception interface 151 from a network management system (NMS) or an operation system (OPS). A clock line 162 is connected to the reference clock reception interface 161 from a clock network (CLK NW).

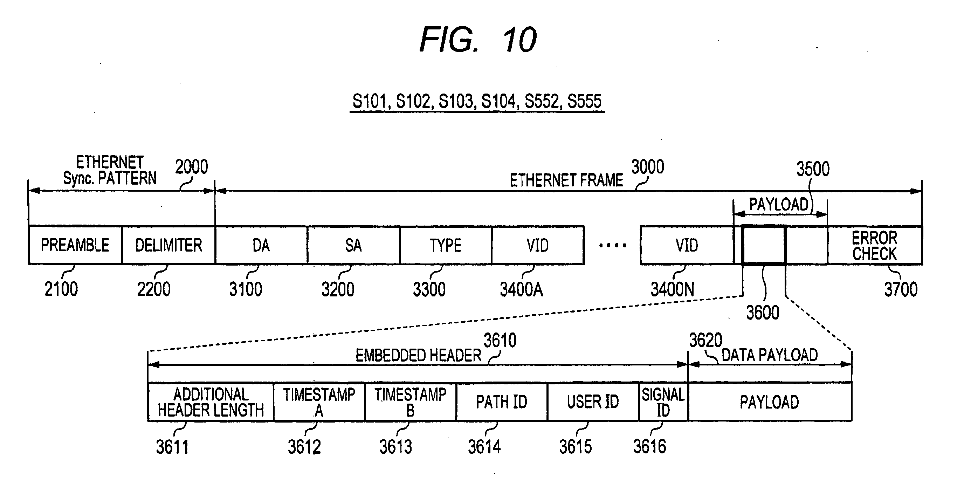

The ME 610 includes N pieces (N≥1) of communication interfaces 11-1 to 11-N so as to be connected to other communication devices, servers, terminal devices, or the like. These interfaces 11 are included in the interface unit 10 and the ME 610 accumulates signals received via the interfaces 11 into the ingress buffer (reception buffer) 211. The input/output management unit 21 issues a timing instruction to start writing signals into the ingress buffer 211 or to transfer frames from the ingress buffer 211 to the input frame processing unit 31. In determination of presence or absence of signal reception, if a specific signal pattern is input, it is determined as the presence of a signal, as will be described later with reference to FIG. 10. The determination process is realized by monitoring the pattern at the interface unit 10. When detecting an input of a signal, the interface unit 10 inputs the information into the input/output management unit 21. The interface unit 10 records the input signal at a predetermined address of the ingress buffer 211 in accordance with an instruction by the input/output management unit 21. A path 81 and a path 811 are signal paths used for notification of conditions or signal transmission from the interface unit 10 to the input/output management unit 21 and the ingress buffer 211, respectively.

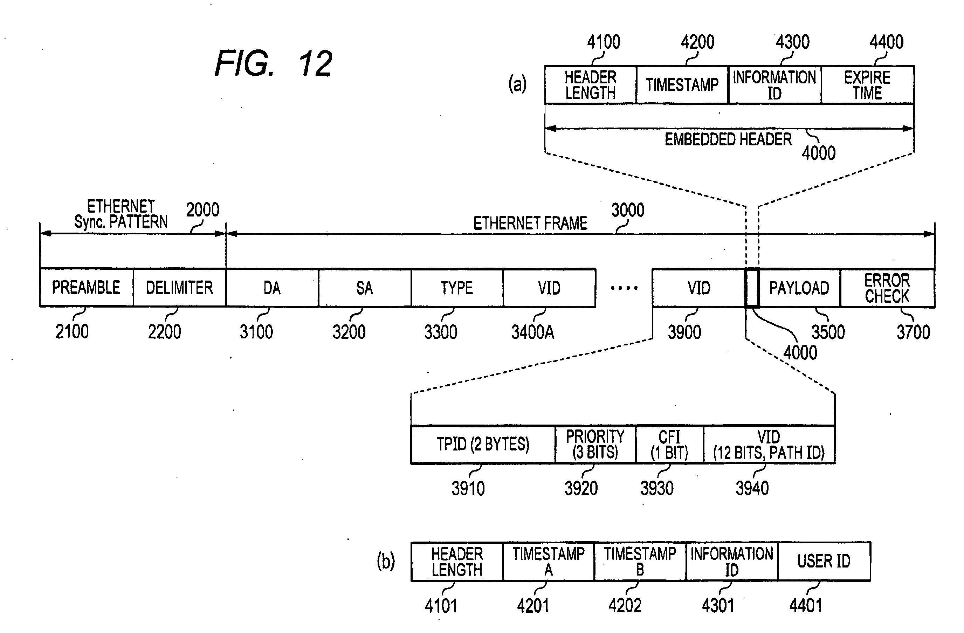

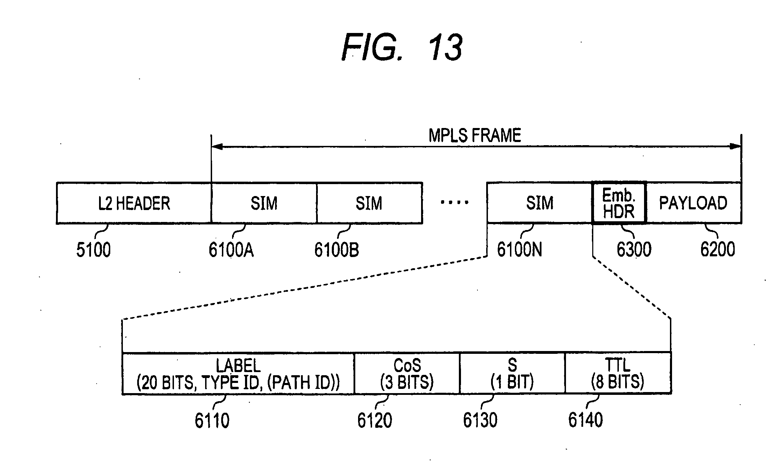

In FIG. 3, lines 12-1 to 12-N connected to the interface unit 10 denote physical lines or logic lines. As will be described later with reference to FIG. 12 and FIG. 13, signal frames are logically identified using VLAN or MPLS tags. If the lines 12-1 to 12-N are regarded as physical lines, each line 12 can include plural logic lines 12-1-1 to 12-1-m1, 12-2-1 to 12-2-m2, or 12-N-1 to 12-N-mN. More logic lines can be set at each logic line. With reference to signal configurations of FIG. 12 and FIG. 13, multilayer logic lines can be set by using plural VLAN tags or by inserting plural SIM headers.

The input frame processing unit 31 reads received frames from the ingress buffer 211. The input frame processing unit 31 determines the type of a received signal (protocol identification, main signal/control signal identification, and the like), extracts the frame header, confirms the destination, and gives/changes/deletes the header information. In the confirmation of the destination of the received frame, the input frame processing unit 31 extracts the header information indicating the destination of the received frame, and verifies the information with the forwarding table 71. The forwarding table 71 holds information for transmitting the frame to the corresponding destination. The information includes a transmission interface identifier and header information to be given to the frame at the time of transmission.

The frame with the destination determined is sorted in accordance with the destination via the switching device 50. Specifically, the switching device 50 serves to connect plural interface boards to each other, and transfers the frame to the interface board having the destination interface on the basis of the header information (header information of the frame body or "inner header" information used only in the equipment) attached to the frame input to the switching device 50. In FIG. 3, a concrete realizing method is not mentioned because correlations between the functional blocks of the communication device are illustrated in a simplified manner. However, such a configuration to mutually connect a signal processing substrate serving as the switching device 50 to an interface substrate having respective interfaces using a backplane is generally used. In general, only the switching device 50 of FIG. 3 is mounted on a different circuit board. However, a difference of a concrete mounting method is not relevant to the nature of the present invention, and thus the detailed explanation thereof is omitted.

When determining a forwarding destination (an interface board or an interface group) of the input frame, the switching device 50 compares and refers to the header information of the frame and the path switching table 73.

As will be apparent from the above-described flow, the frame received by the output frame processing unit 32 from the switching device 50 is a frame to be transferred to the outside from the interface unit 10 on the interface board to which the output frame belongs. The output frame processing unit 32 performs the same process as the input frame processing unit 31. Specifically, the output frame processing unit 32 determines the type of a received signal (protocol identification, main signal/control signal identification, and the like), extracts the frame header, confirms the destination, and gives/changes/deletes the header information. In the confirmation of the destination of the received frame, the input frame processing unit 31 extracts the header information indicating the destination of the received frame, and verifies the information with the forwarding table 71. In general, in the case where the same communication protocol is used for an input frame and an output frame (a transferring frame obtained by processing the header information of the input frame), the input frame processing unit 31 performs almost all the changing processes for the input frame, and performs a transfer process to the switching device 50 and the output interface with reference to the result (header-changed result). On the other hand, in the case where the communication protocol used for an input frame is different from that for an output frame, or plural transmission interfaces can be used for the same destination (as a typical example, a redundant system composed of plural actually-used and auxiliary paths uses a protection function of using, when failure occurs in one system, the other system), the output frame processing unit 32 manages the conditions of output paths and finally determines the destination interface of the output frame. Thus, the function of accessing the forwarding table and the function of identifying an interface as described above are provided even for the output frame processing unit 32.

The output frame processing unit 32 is a block to perform the final process of transmitting the received frame to the interface unit 10. The function of the block includes a process of the header information, a transmission process by priorities (frame order adjustment), and holding of a frame until the distribution time (to be described later). The output frame processing unit 32 selects one of the interfaces 11-1 to 11-N from which the frame received from the switching device 50 is actually transmitted. In this process, the output interface mapping table 42 is referred to. The output interface mapping table 42 stores relations between frame destinations and logic path information (VLAN, MPLS labels, and the like), and the interfaces 11-1 to 11-N. The process of the header information is performed when it is necessary to delete the inner header used for a frame process in the equipment, when it is necessary to change, add or delete the header information if the protocol on the input side is different from that on the output side, or when it is necessary to read frame information for recording a processing status. Further, the priority process includes a process in which when a part of frames is processed in accordance with the frame priority, other frames are held at the delay buffer 41, or a process in which the frame priority is confirmed using the delay buffer 41 to rearrange the order of transmitting the frame to the egress buffer 221.

As important roles of the management equipment ME 610, ME 620, and ME 630, each manages the transmission time of an uplink signal from the user terminal 501 to the trade server 700 or 800, the reception time of a downlink signal transmitted from the trade server 700 or 800 towards the user terminal 501, and the transfer time of the downlink signal towards the user terminal 501.

When receiving the uplink signal from the user terminal 501-side, the input frame processing unit 31 refers to the time information (ToD database) 72 held in the equipment to obtain the reception time of the frame. The reception time is used in a time stamp insertion process for the received frame in the course of the header process by the input frame processing unit.

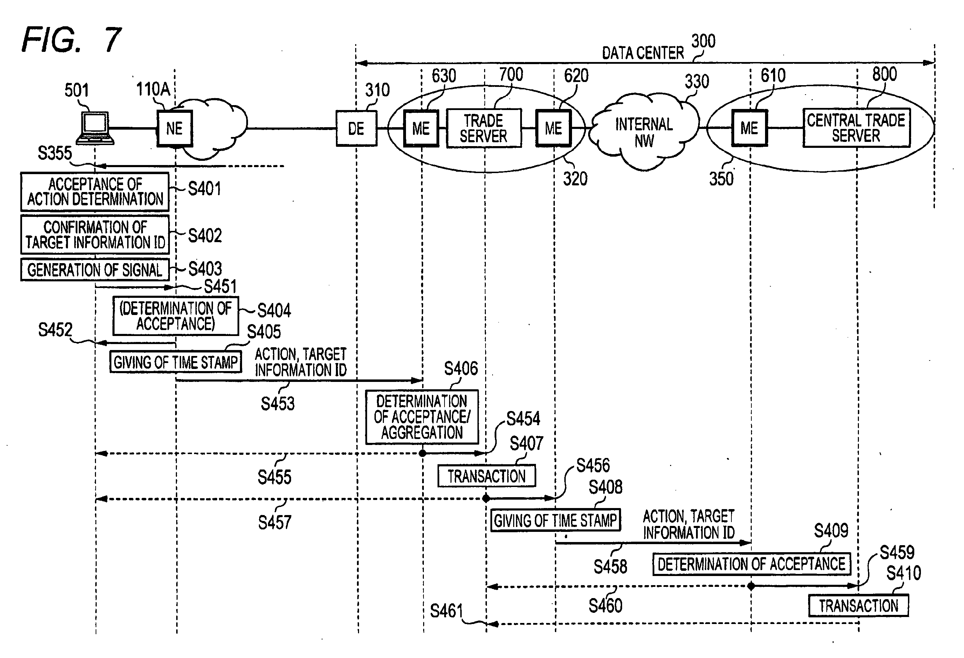

Further, the input frame processing unit 31 identifies a service targeted by a user action included in the uplink signal. In the identifying process, the input frame processing unit 31 refers to a service identifier included in the uplink frame. The input frame processing unit 31 refers to the expire time database 74 along with the reception of the uplink signal, so that the acceptance deadline of the user action corresponding to the service identifier. If the reception time passes the expire time, the input frame processing unit 31 notifies the user terminal 501-side of acceptance determination (rejection) and discards the frame in accordance with a sequence to be described later with reference to FIG. 7.

When receiving the downlink signal transmitted from the trade server 700 or 800 to the user terminal 501-side, the input frame processing unit 31 extracts the service identifier, the path identifier (if included), the expire time, and the distribution time information included in the frame. With the use of the service identifier of these, the input frame processing unit 31 verifies the expire time database 74 to confirm whether or not the service information has been recorded. If the service information has already been recorded, the input frame processing unit 31 confirms and updates (if necessary) the expire time. If it is an unregistered service identifier, the input frame processing unit 31 newly registers the service information (including the service identifier and expire time) to the expire time database 74. If the path identifier is included, the input frame processing unit 31 uses the same to confirm a path for the exiting service. The path identifier together with the service identifier can be recorded into the expire time table. In this case, more segmentalized information management can be realized by combining the service identifier with the path identifier.

The input frame processing unit 31 stores the information distribution time extracted from the downlink signal into the distribution time database 43. The distribution time information of the downlink signal is used for adjusting the time (timing) when the downlink signal is transferred to the user terminal 501. The distribution time information may be notified as standard time information or as the (relative) waiting time from when the downlink frame is received by the management equipment. The distribution time database 43 is referred to from the output frame processing unit 32. When it is determined that the signal identifier (FIG. 10) of the transmission frame is a target for adjustment of the distribution time, the output frame processing unit 32 uses the distribution time database 43 to determine the signal transfer time from the output frame processing unit 32 to the egress buffer 221 or the signal reading time from the egress buffer 221 to the interface unit 10. The signal may be transferred from the delay buffer 41 to the egress buffer 221 after waiting until the designated time, or a frame stored in the egress buffer 221 or the delay buffer 41 may be forcibly read from the read control unit 22 at the designated time to be transmitted to the interface unit 10.

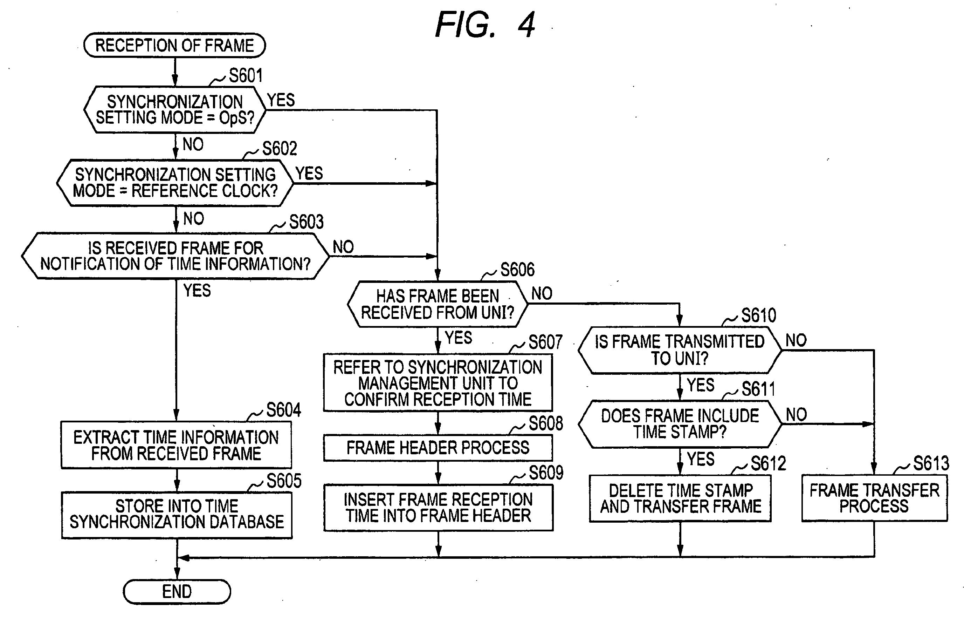

With reference to FIG. 4, a processing flow in the input frame processing unit will be described. As described with reference to FIG. 3, the main signal frame and the control signal frame (device control, Operations, Administration and Maintenance (OAM), and synchronization control) are input to the input frame processing unit 31. Thus, the input frame processing unit 31 needs to identify each frame to be appropriately processed.

The input frame processing unit 31 preliminarily sets a mode of obtaining a clock and time information. Every time receiving a frame, the mode of obtaining a clock and time information is confirmed (S601 and S602). The mode confirmation process may be conducted by the input frame processing unit 31 at the time of receiving the frame, or may always be conducted at constant timing intervals to store the mode into the input frame processing unit 31. The synchronization mode database 311 and the synchronization mode database 751 hold the mode settings.

In FIG. 4, if receiving a frame, the input frame processing unit 31 determines whether or not the synchronization mode setting is a setting mode by the Operating System (OpS) (S601). If not, the input frame processing unit 31 determines whether or not the synchronization mode setting is a dedicated clock reference mode (S602). If not, a synchronization control frame used to notify synchronization information is included in a signal received by the interface unit 10 of the ME 610. Thus, the ME 610 needs to distinguish normal data frames from these synchronization control frames. Specifically, the input frame processing unit 31 determines whether or not the received frame is for notification of time information (S603). If the received frame is the synchronization control frame (YES), the input frame processing unit 31 extracts time information from the received frame (S604). In order to use the time information to control operations (timing adjustment of a frame processing clock, time settings in the equipment, or an adjustment process or a difference absorption process between an in-equipment clock and a transmission line clock) of the ME610, the input frame processing unit 31 stores the time information into the time synchronization database (ToD database) 72 (S605), and the process is completed.

The ToD database 72 is included in the in-equipment database unit 70, and is confirmed and updated by the synchronization management unit 75. The input frame processing unit 31 writes data into the ToD database 72 using a path 92. At the same time, the input frame processing unit 31 notifies the synchronization management unit 75 of the reception of the synchronization information through a path 90. The synchronization management unit 75 confirms and refers to the synchronization information input to the ToD database 751 through a path 93 to control the in-equipment clock and to manage the setting time.

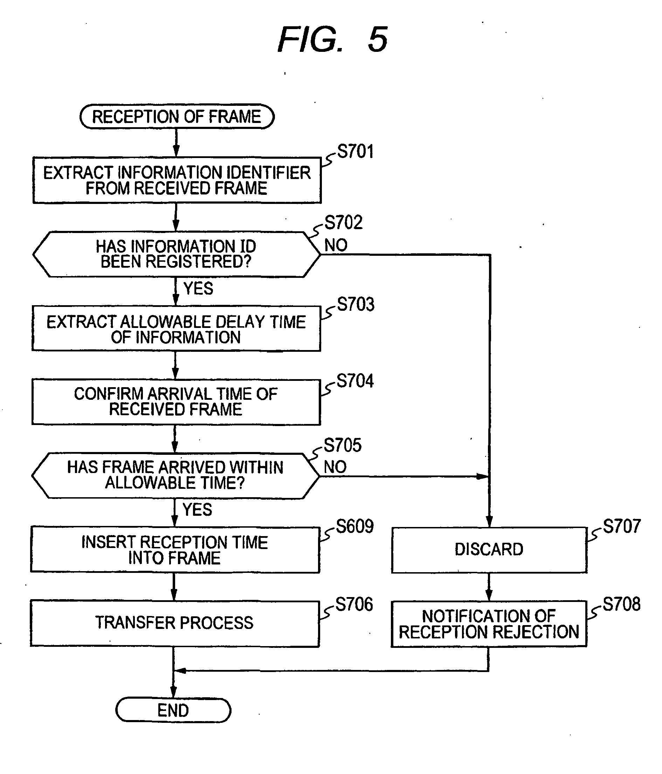

If YES in Step 601, if YES in Step 602, or if the received frame is not the synchronization control frame in Step 603 (NO), the input frame processing unit 31 determines first whether or not the interface 11 has received the frame from the UNI (S606). If the data frame has been received from the user terminal 501-side (UNI side) (YES), the input frame processing unit 31 refers to the synchronization management unit 75 to confirm the reception time (S607). The input frame processing unit 31 changes the frame configuration, and gives, deletes, or changes the header information (if necessary) (S608). The input frame processing unit 31 inserts the reception time into the received frame (S609), and the process is completed. It should be noted that the process of Step 608 or the process of Step 609 may be performed first. It is only necessary to complete the insertion of the time information almost at the same time when the header process for the frame is completed. It should be noted that an acceptance determination process is omitted in FIG. 4, and only the process of the acceptable frame is shown. The acceptance determination process is performed between Step 607 and Step 608. A processing procedure of the acceptance determination will be described using FIG. 5.

If the interface 11 having received the new frame is not on the UNI side (S606: NO), the frame is a downlink signal. If the received frame is transmitted to the user terminal 501 (UNI), the frame is a data frame or an allowable delay time notification frame transmitted to the NE 110A. The input frame processing unit 31 determines whether or not the frame is transmitted to the UNI (S610). If YES, the input frame processing unit 31 confirms whether or not the frame is configured to include a time stamp field (S611). If the time stamp is included, the received frame is held until the information distribution time indicated by the time stamp, and the frame is transmitted at the designated time. In this case, the distribution time information is already unnecessary for the user terminal 501, and thus the output frame processing unit 32 deletes unnecessary header information including the time stamp information in a header process to transmit the frame (S612), and the process is completed.

Further, if the received frame is not transmitted to the UNI (S610: NO) and if the received frame is transmitted to the UNI and includes no time stamp information (S611: NO), the frame is not a signal distributed via the path set at the ME 610 (it is conceivable that the frame is a signal passing through another path, a synchronization control frame transmitted and received between the communication devices for time synchronization, a path control frame used for a path control protocol such as STP to operate, or a allowable delay time notification frame for the equipment). At this time, a normal transfer process is performed for each frame (a path control frame or a control frame of each protocol) to be transferred (S613), and the process is completed.

With reference to FIG. 5, a processing procedure when determining whether or not to accept an uplink signal in the management equipment will be described. In FIG. 5, if an uplink frame is received in Step 606 of FIG. 4 (YES), the input frame processing unit 31 extracts first an information (service) identifier targeted by the frame (S701). The input frame processing unit 31 determines whether or not the extracted information identifier has been registered in the equipment (S702). If YES, the input frame processing unit 31 calculates the allowable delay time (S703). The input frame processing unit 31 confirms the arrival time of the received frame (S704). The input frame processing unit 31 determines whether or not the received frame has arrived within the allowable time (S705). If YES, the input frame processing unit 31 inserts the reception time into the frame (S609). The input frame processing unit 31 executes a transfer process (S706), and the process is completed.

If NO in Step 702 or Step 705, the input frame processing unit 31 discards the frame (S707). The input frame processing unit 31 notifies (notification of reception rejection) the user terminal 501 as a sender, NE 110A, or trade server 700 that the discarding process has been performed (S708), and the process is completed.

If the information identifier has not been registered, it is conceivable that the user terminal 501 requests information from a new site, or the frame is a request for information for which the distribution time is not managed. In this case, it is not necessary to discard the frame. Thus, it is only necessary to perform a normal process (including a header.process and a priority transfer process) to transfer the request to a high-order server.

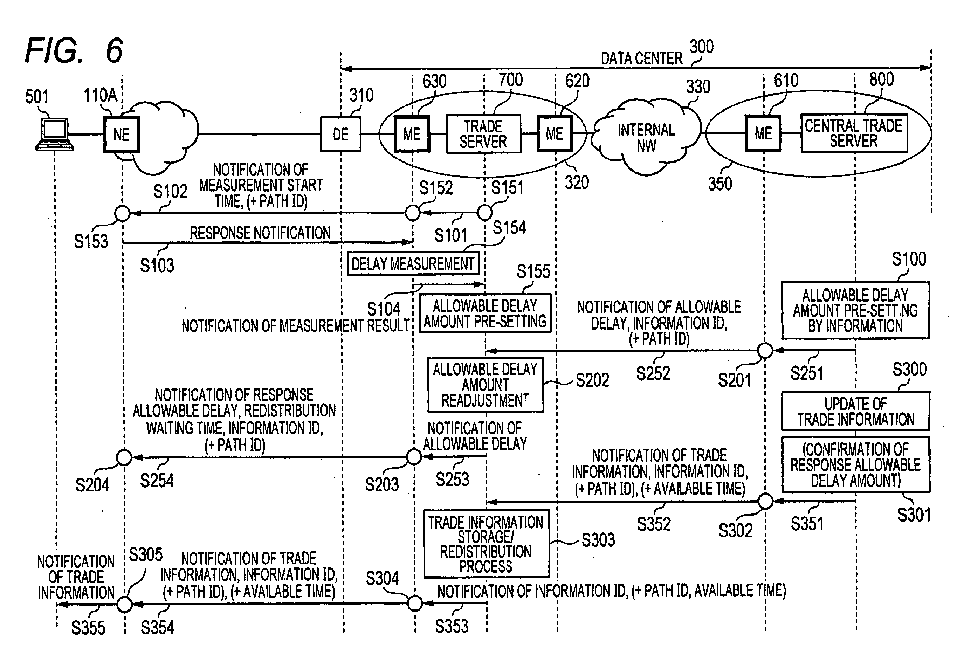

With reference to FIG. 6, a flow of data processes among the data center 300, the NE 110A, and the user terminal 501 will be described. FIG. 6 is a diagram for explaining communications between the user terminal 501 and the central trade server 800 installed in the data center 300. The management equipment ME 610, ME 620, and ME 630, the internal communication network 330, the trade server 700, the data center network edge DE 310, and the information transport network edge NE 110A are provided between these devices. The configuration of the communication network connecting between the DE 310 and the DE 110A has already been described using FIG. 1, and thus the explanation thereof is omitted in FIG. 6. It should be noted that the configuration of the communication network does not affect the operations in the embodiment.

The trade server 700 distributes market information (trade information) obtained from the central trade server 800 to the user terminal 501. Further, the trade server 700 receives information (buying and selling of stocks and exchange, making a bid for an auction, or the like) input at the user terminal 501 to process the information, and then aggregates the information to the central trade server 800.

In normal trade, a service provider (a bank, a securities company, or the like) that owns the trade server 700 processes the information sent from plural user terminals 501 at the trade server 700, and then the information is mutually transmitted and received by trading business operators through transactions between banks or securities companies (interbank market transactions). At this time, a signal is transmitted and received to/from the central trade server 800 installed at a stock exchange.

Time required to transmit and receive a signal between the trade server 700 and the user terminal 501 differs depending on the connection distance therebetween. The trade server 700 (a bank or a securities company) accommodates plural users. Therefore, time required to communicate with the trade server 700 differs depending on the user terminal 501 due to the communication environments of the users. In order to improve the fairness between the users in consideration of dispersion of the communication time, the trade server 700 recognizes the communication time with each user terminal 501 (each NE 110A) accommodated in the server, and performs a process (to be described later) of unifying the time of distributing the market information to each user terminal 501 and the time of accepting an entry (a buying and selling application, a bid, or the like) to the market information from the user terminal 501.

Specifically, the trade server 700 measures the time required to communicate with each user terminal 501 accommodated in the trade server 700 prior to the time of obtaining the market information from the central trade server (S151 to S154). In the first place, the trade server 700 generates a measurement signal S101, and transmits the signal towards the NE 110A serving as an end point of a targeted measurement path (S151). If the measurement signal S101 reaches the ME 630, the ME 630 records the time of receiving the signal (S152). A measurement signal S102 passes through the DE 310, and reaches and returns from the NE 110A having a time management function (S153). A returning signal (response notification S103) transmitted from the NE 110A reaches the ME 630. At this time, the ME 630 records the arrival time of the signal. The ME 630 compares the arrival time of the response notification S103 with the time of transmitting the measurement signal S102 (S154). The ME 630 notifies the trade server 700 of the time required for communications in the section (S104). When receiving the delay information S104, the trade server 700 stores the same at a predetermined place of the server. The time required for communications differs depending on the NE 110A as a destination, and thus the trade server 700 similarly measures the time required for communications for each NE 110A connected to the trade server 700.

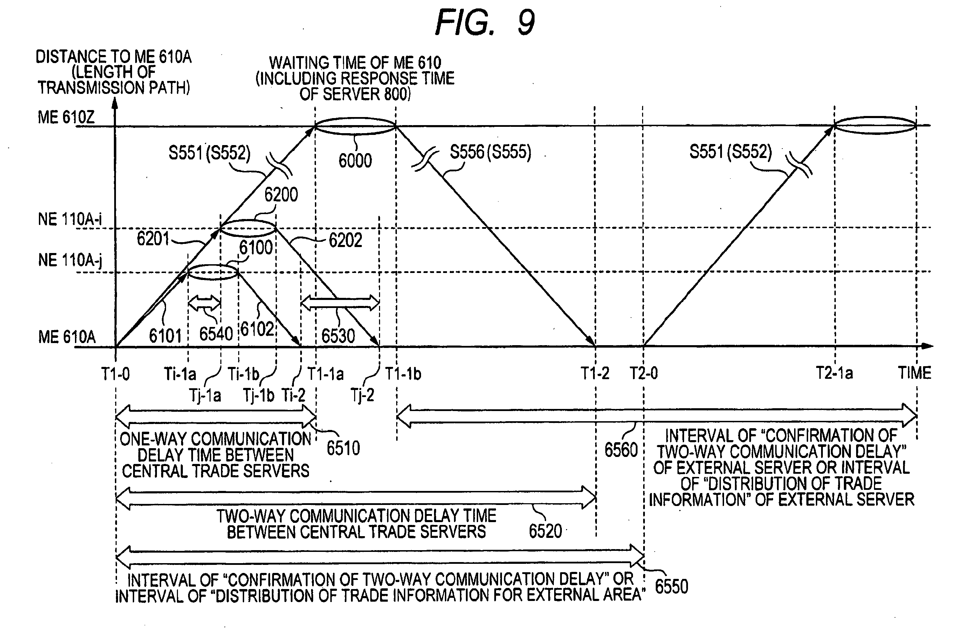

The trade server 700 regards the NE 110A with the longest communication time (the communication time is regarded as the maximum delay time) as a standard, and the allowable delay time is set to be the maximum delay time or longer (S155). It should be noted that Step 155 will be described in more detail with reference to FIG. 9.

The sequences from Step 100 to Step 204 are processing procedures in the respective devices to set the disclosure time/response acceptance time for information disclosed from the central trade server 800 to the user terminal 501.

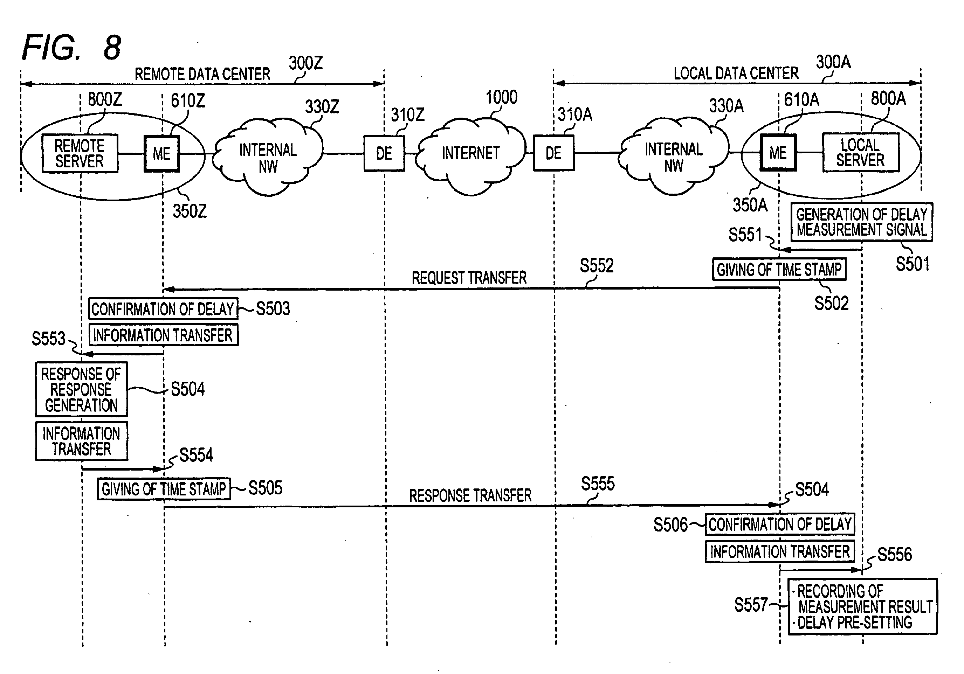

FIG. 6 assumes a condition (S100) in which one or more allowable delay times (duration of being able to wait from the information distribution time to the response reception time for the information) are preliminarily set in accordance with the types of downlink signals (disclosure information). Step 100 will be described later with reference to FIG. 8 and FIG. 9. When the allowable delay time of the downlink signal type (Web contents, trade prices in stock and exchange markets, or the like) is updated, the central trade server 800 notifies the ME 610 of the delay time (S251). The notification S251 includes an information identifier for identifying the type of information. The ME 610 stores the allowable delay, and transfers the information to the trade server 700 (S252). The trade server 700 refers to the identifier of the information and the allowable delay time as similar to the ME 610 to be stored (added/updated) into the server (S202).

In the adjustment (S202) of the allowable delay time in the trade server 700, the waiting time to receive a response from the user terminal 501 for the information disclosed by the trade server 700 is calculated on the basis of the communication time between the trade server 700 and the user terminal 501 obtained in Step 151 to Step 154. In order to minimize the differences of communication distances between the users, time required to process an input signal in the trade server 700 from the user terminal 501 and the communication time with the central trade server 800 need to be considered. Therefore, the allowable delay time of the disclosure information type calculated by the trade server 700 is adjusted to be shorter than that held by the central trade server 800.

The trade server 700 notifies the ME 630 of the calculated allowable delay time (S253). The ME 630 stores the allowable delay (S203).

In response to the notification of the allowable delay time (S252) from the central trade server 800, the trade server 700 adjusts the information disclosure time for the user terminal 501. The information disclosure time is adjusted to establish fair information access environments for the all users because the time required for communications between each user terminal 501 and the trade server 700 differs depending on the user terminals. Specifically, the waiting time until the distribution to the NE 110 and the user terminal 501 is started after the downlink signal (disclosure information) is received is set at the trade server 700 and the NE 110 to unify the timing of browsing the information by the users. The trade server 700 notifies the ME 630 of the allowable delay (S253), and notifies the NE 110 of the waiting time when the disclosure information is distributed to the user terminal 501 (S254). The NE 110 stores thereinto the identifier of the disclosure information included in the notification S254 and the waiting time while associating them with each other (S204). It should be noted that although it has been described that the trade server 700 notifies the ME 630 of the allowable delay in Step 253, the ME 630, in practice, snoops for the notification from the trade server 700 to the NE 110 to add a time stamp thereto.

Further, Step 300 to Step 355 are signal processes related to distribution of the downlink signal (disclosure information). When accepting a disclosure request for Web contents from a user or when market information such as trade prices of stocks and exchange is updated (S300), the central trade server 800 distributes the downlink signal as shown in FIG. 6. On the basis of the type of information generated and transmitted by the central trade server 800, the up-to-date allowable delay time is confirmed at the time of starting transmission, or the allowable delay time is newly obtained in some cases (S301). A downlink signal S351 transmitted by the central trade server 800 includes an information identifier for identifying the information and the time of updating the information. When detecting the downlink signal S351, the ME 610 confirms the information identifier included in the signal, and further records the time of passage (the arrival time at the ME 610 or the transmission time from the ME 610 is employed) of the signal. The time of passage is set as the standard time (zero point) when the allowable delay time is measured. The ME 610 adds the disclosure information to a downlink signal S352 to be notified to the trade server 700. The trade server 700 downloads the information thereinto and performs a signal process necessary to distribute the information again to the user terminal 501 (S303).

At the time of distribution of the downlink signal, an available period is simultaneously notified in accordance with the type of information conveyed by the signal. Market information and news distribution that are regularly or irregularly updated are good examples. In this case, it is necessary to inform the up-to-date market conditions of users. Distribution of the previous conditions after the conditions were changed is generally meaningless (except conditions such an analysis of a market trend). The expire time of the information can be transmitted in the form of being inserted into the frame of the downlink signal transmitting the information. It is important to hold the identifier of information and the expire time corresponding to the information in the communication devices while associating them with each other. The communication devices in this case include the central trade server 800 and the trade server 700. When the information is updated, an expire time timer is simultaneously reset. This can be used for means to confirm the validity of the information. Specifically, the expire time is instructed by the central trade server 800 or the trade server 700. However, the ME 610, ME 620, ME 630, and NE 110A are allowed to confirm that updating of the information and resetting of the expire time are simultaneously performed. The procedure can prevent the falsification and wrong distribution of information.

As shown in FIG. 6, a downlink signal S353 transmitted by the trade server 700 reaches the ME 630 first. The ME 630 records thereinto the information identifier and the time of passage of the signal (S304), and transfers the signal to the user terminal 501 (S354). The operation of the ME 630 is substantially the same as that of the ME 610. The downlink signal S354 received by the user terminal 501 includes an information identifier (a parameter used for extracting individual information such a target user, a service type, and a required quality) for identifying the information and the time (the waiting time from when the ME 630 receives the information to when the ME 630 distributes the information to the user terminal 501) at which the information can be disclosed. Further, the signal S354 includes a path identifier for identifying the passage path from the ME 630 to the NE 110A and the available (disclosure) period of the information as additional information.

In the allowable delay time setting sequences (S100 to S204) and the downlink signal distribution sequences (S300 to S305), a path identifier indicating the passage path of the downlink signal is inserted into the downlink signal transmitted to the trade server 700, ME 610, ME 620, ME 630, and NE 110A, so that the time required for communications can be more reliably measured in accordance with a preliminarily-set path. Therefore, fairness can be secured at a higher degree. If the communication path is dynamically changed by an STP or an IP routing protocol (RIP, OSPF, or the like), the communication distance from the central trade server 800 or the trade server 700 to the user terminal 501 is also changed. Thus, the measurement accuracy of the time required for communications is further deteriorated. Accordingly, the path identifier is desirably inserted into the frame in order to more effectively perform the measurement.

When receiving the downlink signal, the NE 110A stores the additional information such as the information identifier thereinto. The NE 110A always refers to the time information. If the information disclosure time included in the downlink signal is (if it has been past the time) earlier than the reception time, the NE 110A immediately transfers the signal to the user terminal 501. If the time is before the disclosure time at the time of receiving the signal, the NE 110A waits until the disclosure time while holding the information, and transmits the information to the user terminal 501 at the disclosure time (S355).

In the above-described process, it is assumed that the same standard time is recognized in the data center 300, the provider network 200, and the packet transport network 100. Therefore, it is necessary for the communication devices establishing the communication path from the central trade server 800 to the NE 100A to have a mechanism of synchronizing the timings and phases of operation clocks. In addition, a standard time information distribution system using a synchronization system needs to be established, and each device needs to recognize the standard time. Further, each circle illustrated in the processes of the ME 610 and ME 630 denotes a time stamp (explanations thereof are partially omitted).

With reference to FIG. 7, a flow of processes relevant to an uplink signal transmitted from the user terminal to the trade server will be described. In FIG. 7, the user terminal 501 obtains various information transmitted from the server in the data center in accordance with the flow of FIG. 6 (S355). For the disclosed information, the user terminal 501 accepts determination of an action by each user (S401). The user actions include browsing of Web contents (click on a Web link), an information search (browsing of a search Web site and an entry of search keywords at the Web site), and placing buying and selling orders to trading companies when referring to stock/exchange market information. Especially, market trading is a typical application in which a gap between users depending on the performance of the communication system should be excluded as much as possible.

The user action appears in the form of a disclosure request or a response for certain information. In order to process the response, the user terminal 501 associates the disclosure information with the response (S402). It should be noted that each of the NE 110A, ME 630, ME 610, trade server 700, and central trade server 800 has the same function of associating the disclosure information with the response. However, the explanation thereof is omitted below.

After confirming the correspondence relation, the user terminal 501 generates a signal (uplink signal) to be transmitted to the trade server 700, and transmits the same (S403). An uplink signal S451 reaches the NE 110A located at the edge of the packet transport network 100 on the user side via the user network, the access lines and the access network 500 to which the user terminal 501 belongs. The NE 110A refers to the time of receiving the uplink signal S451 and the information identifier targeted by the signal to confirm whether or not the uplink signal has arrived before the response expire time for the information (S404). If the arrival time is past the expire time in Step 404, a signal for notifying the expiration of the response is transmitted to the user terminal 501 (S452; see FIG. 10 to FIG. 13 for signal configurations). On the contrary, if the uplink signal has arrived before the response expire time, the NE 110A gives a time stamp indicating the reception time to the uplink signal S451 to generate and transmit an uplink signal S453 (S405). Specifically, the uplink signal S453 transmitted by the NE 110A includes the user action, the information identifier, and the time stamp given by the NE 110A.

Next, when the uplink signal reaches the ME 630, the ME 630 performs first the same process as the NE 110A. Specifically, the information identifier and the corresponding response acceptance deadline are recorded in the ME 630. In the ME 630, the time of receiving the uplink signal S453 is recorded to be compared with the response expire time of each information identifier, and it is confirmed whether or not to permit the reception (S406). Even if the reception time is before the response deadline in the NE 110A, the arrival time at the ME 630 is not always before the deadline. This is because there is a possibility that the delay is increased more than expected due to the effects of troubles and crowding in the packet transport network 100. Especially, in the case of using the packet communication technique, such things are likely to occur. Even if the clocks and time settings of the respective devices are synchronized with each other, such phenomena are likely to occur in the case where a path is configured with Hop-by-Hop as in IP/MPLS and a forwarding table in the device is dynamically changed. Further, even in a line-switching transmission network for synchronized communications, it is necessary to perform a path switching process (protection) in the communication network when a failure occurs during communications. Thus, the communication time in the packet transport network 100 is not always guaranteed. Thus, if the result of the confirmation in Step 406 shows that the reception time is past the expire time, the ME 630 notifies the NE 110A (and the user terminal 501) that the signal is unacceptable (S454).

The ME 630 aggregates one or more user actions that have arrived before the response deadline held by the ME 630, and then notifies the trade server 700. The aggregation work is conducted in the process (S406) of the ME 630. In the process, the priority of each aggregated action is determined by referring to the time information given by the NE 110A. The most basic example of determining the priority of the action is to determine the priority in ascending order of the action generation time (arrival time at the NE 110A). Further, as an application, there is a method of determining the priority by combining the time information with the user information (among frames that arrived at the same time, an important user is given priority on the basis of user contract information, or among frames that arrived within the allowable time, a premium user is given preferential treatment even if the frame arrival time is late by placing importance on the user priority). After giving priority, the ME 630 outputs these user actions to the trade server 700 as the signal S454.

In order to notify the trade server 700 of the priority result determined by the ME 630, plural methods can be selected. One of them is a method in which the user actions (uplink signal frames) are held at the ME 630 and the high-priority user action is transferred first to the trade server 700. As another method, a signal obtained by inserting priority information into the user action frame is transferred to the trade server 700. The difference between the two lies in that the ME 630 or the trade server 700 holds the user action frame. Neither of the methods largely affects the effect. However, the (former) method of holding the frame at the ME 630 that determines the priority of the user action is more desirable in consideration of the load of the entire system.

The trade server 700 processes each user action on the basis of market information managed by the trade server 700 (S407). A securities company performs market trading in response to the user action. In this case, the securities company does not respond to each user action. After buying and selling requests are once aggregated in the securities company, a certain amount of buying and selling requests is collectively handled as trade requests for the market. Each securities company processes the user action while setting a certain margin (a price range or the like at the time of accepting the user action caused by a difference between the buying and selling price in the interbank market and the buying and selling price presented by the securities company and a difference in the processing time) for the market. Therefore, it is not the trade result in the central trade server 800 but the processing result in the trade server 700 that is notified to the user (user terminal 501). A downlink signal S457 is a signal to notify the user terminal 501 of the processing result (success or failure of trade, the contract price, and the like) in the trade server 700. Further, an uplink signal S456 represents a trade signal between the trade server 700 and the central trade server 800.

The uplink signal S456 transmitted from the trade server 700 is given a time stamp indicating the time of passage (reception time) of the signal every time passing through the ME 620 (S408). The information identifier and the corresponding response acceptance deadline are recorded in the ME 620 as similar to the NE 110A. The operation of the ME 620 is the same as that of the NE 110A, and thus the explanation thereof will not be repeated. Further, the operation of the ME 610 in Step 458 is the same as that of the ME 630 for the uplink signal S453, and thus the explanation thereof will not be repeated. An uplink signal S459 is a signal input to the central trade server 800 as a result of the acceptance determination S409 by the ME 630, and a downlink signal S460 is a signal that notifies the trade server 700 of whether or not to accept the signal as a result of the acceptance determination S409 by the ME 630.

The central trade server 800 accepts a trade request from each trade server 700 (owned by a bank or a securities company), and executes each trade process in accordance with the priority set by the ME 610 (S410). Further, the central trade server 800 notifies the trade server 700 of the trade result (S461). The trade result becomes the up-to-date market information. In response to the result, the trade server 700 discloses the market information to each user terminal 501 in accordance with the sequences shown in FIG. 6.

With reference to FIG. 8, a measurement procedure of the allowable delay time in the central trade server will be described. The sequences of FIG. 8 are processing content in pre-measurement (S100) of FIG. 6. In FIG. 8, a data center to which a central trade server 800A performing the measurement belongs is referred to as a local data center 300A. Further, a data center 300Z which faces the local data center 300A and to which a central trade server 800Z responding to the measurement signal belongs is referred to as a remote data center 300Z. The configurations of the data centers 300A and 300Z are the same as those in FIG. 6 and FIG. 7. The local data center 300A includes the central trade server 800A, ME 610A, and an internal communication network 330A, and a DE 310A. The remote data center 300Z includes the central trade server 800Z, ME 610Z, an internal communication network 330Z, and a DE310Z. Both data centers 300 can be communicated with each other via the Internet 1000.

The delay time that should be recognized by the central trade server 800A is determined on the basis of a difference in the communication time with the trade server 800Z that are dotted at many locations. In general, the communication delay between the server 800 in an area where the central trade server 800A is installed, and the trade server 700 or the user terminal 501 is larger than that with the central trade server 800Z in the remote data center 300Z via the Internet. The central trade servers of the cities (corresponding to, for example, Sapporo, Tokyo, Osaka, Nagoya, and Fukuoka in Japan, and the New York, London, and Hong Kong markets in foreign countries) mutually share market information to form an international trading market. Specifically, the central trade servers 800 in the markets around the world mutually notify the market information to each other as needed. Accordingly, for financial institutions such as banks and securities companies, a system insusceptible to affects of the delay and a business model that sets a sufficient margin need to be established in consideration of intervals of updating market information and a difference in the communication time at the time of mutual notification.

Hereinafter, the sequences of FIG. 8 will be described. The central trade server 800A generates and transmits a delay measurement frame at the time of starting the measurement (S501). When receiving a delay measurement frame S551, the ME 610 records the time of passage of the frame. Two methods are available to record the time of passage. One is a method in which time information is inserted into the delay measurement frame S551 to be transferred to the remote database 800Z (S552). The other is a method in which an identifier of the response signal from the remote data center 300Z for the measurement signal and the measurement frame and the time at which each signal passed through the ME 610 are recorded into the ME 610. In the former case, the ME 610 is allowed to have a function of identifying the response signal and a function of confirming the time (in-frame time stamp) at which the response signal (response frame) was transmitted by the ME 610 and the time (confirmation of the time at the ME 610) at which the response signal was received by the ME 610. Further, in the latter case, the ME 610 is allowed to have a delay measurement table for recording the identifier of the delay measurement frame and the identifier of the response frame while associating them with each other. In addition, the ME 610 is allowed to have a function of obtaining the transmission time of the delay measurement frame and the reception time of the response frame in the ME 610 and a function of recording the time information into the delay measurement table. Hereinafter, a delay measurement method using the former case will be described.

The ME 610A transmits the measurement frame S552 with the transmission time information inserted to the remote data center 300Z. The measurement frame S552 passes through the internal communication network 330A and the DE 310A of the local data center 300A, the Internet 1000, and the DE 310Z and the internal communication network 330Z of the remote data center 300Z to reach the ME 610Z. It should be noted that the ME 610Z is installed at the previous stage of the central trade server 800Z in the remote data center 300Z.

When receiving the delay measurement frame S552, the ME 610Z refers to the identifier of the frame to recognize that the frame is the delay measurement frame and the sender thereof is the central trade server 800A of the local data center 300A. Further, the ME 610Z stores the frame arrival time together with the identifier of the delay measurement frame into the ME 610Z, and records the communication time from the local data center 300A. The ME 610Z notifies the delay measurement frame itself or the arrival of the frame, and further reports a control signal of notifying the communication delay time with the local data center 300A to the central trade server 800Z as a delay measurement notification S553.

The central trade server 800Z having received the delay measurement frame S553 generates and transmits a response signal for the delay measurement frame (S504). Hereinafter, the ME 610Z similarly inserts the time information for recording the time of passage of the signal to the response frame (S505). The ME 610Z transfers the response frame to the central trade server 800A. A signal S555 including the time information reaches the ME 610A in the local data center 300A.

The ME 610A records the time of receiving the response signal S555, and confirms the transmission time information included in the response signal S555 and set by the ME 610Z (S506). In the process (S506), the reception time and the transmission time are compared with each other to record one-way communication delay time and two-way communication delay time between the central trade servers 800A and 800Z. Thereafter, the ME 610 notifies the central trade server 800A of the delay measurement frame itself or the arrival of the frame, and further transmits a control signal of notifying the communication delay time with the local data center 300Z to the central trade server 800A as a delay measurement notification S556.

With reference to FIG. 9, a relation between the communication delay time between the central trade servers and the signal arrival time at each user terminal will be described. In FIG. 9, it is not necessary to always match the timing of performing the delay measurement for setting the distribution waiting time for the downlink signals shown by the sequences of FIG. 6 that is set at the trade server 700 and the NE 110A and storage (update) of the distribution waiting time to the timing of performing the delay measurement for the response waiting time for the uplink signals shown in FIG. 7 and storage (update) of the response waiting time (it is not necessary to perform the measurement of the time required for communications and the calculation of the distribution waiting time and the response waiting time at the same time in the system). Further, as will be apparent in FIG. 8, system administrators and operators of communication networks are generally different depending on data centers. Especially, in the case where market information is mutually notified among foreign markets, it is unusual to match not only the timing of the delay measurement but also the timing of notification of the market information among the data centers in the cities. Further, in consideration of the fact that the connection conditions of the user terminals 501 are frequently updated depending on user environments, it is obvious that the delay measurement process controlled by the central trade server 800 and the delay measurement process controlled by the trade server 700 may be performed at the same time. However, if the both are separately performed from each other, processing load on the central trade server 800 that aggregates various data can be reduced. This is an issue in a system design and a system operation, and there are no effects in essentials. However, it is an important issue in studying more effective implementation.

FIG. 9 is a graph in which the horizontal axis represents elapse of time and the vertical axis represents a distance from the ME 610A (the time required for communications). In order to facilitate understanding of a difference in delay time among the trade server 700, the user terminal 501, and the central trade servers 800A and 800Z, the delay measurement starts from the original point (T1-0) of the horizontal axis, and the both are overlapped with each other.

The delay measurement frame S551 transmitted by the ME 610A at the measurement start time (T1-0) reaches the ME 610Z via the Internet 1000 and the like. After the ME 610Z receives the signal, the ME 610Z waits for processing time 6000 including the communication time with the central trade server 800Z and the processing time in the central trade server 800Z until a response signal S556 is transmitted. The period until the time (T1-2) at which the response signal reaches the ME 610A again via the Internet 1000 corresponds to two-way delay time 6520.

Further, one-way communication delay time 6510 of a signal transmitted from the local data center 300A is the time required until the time (T1-1a) at which the ME 610Z receives the delay measurement frame S551 transmitted from the ME 610A. Likewise, the one-way communication delay time of a signal received by the local data center 300A corresponds to the period from the time T1-1b to the time Tl-2. It is assumed that clock synchronization and time synchronization are realized in all the communication devices and servers. Thus, the time information given to the delay measurement frame or the response frame by the ME 610A or ME 610Z is compared with the reception time of the signal by the opposed ME 610Z or ME 610A, so that the one-way communication delay time can be accurately obtained. The one-way communication delay time 6510 is affected most by communication conditions in the Internet 1000 where the synchronization is not guaranteed. In addition, although variations in the communication time are dependent on the synchronous accuracy in the data centers 300A and 300Z and each communication device, variations in the communication time when a signal passes through the Internet 1000 is extremely large as compared to those in the data centers and the communication devices. Specifically, for the user terminal 501 that performs commercial trading at the data center 300 to which the central trade server 800 belongs, the time required for communications with the central trade server 800 or the trade server 700 can be designed to be sufficiently smaller than that between the central trade servers 800A and 800Z.

In FIG. 9, a delay measurement model between the trade server 700 and the user terminal 501 (to be precise, the NE 110A) is similarly shown. The communication distance between each user terminal 501 and the trade server 700 usually differs, and thus the time required for communications differs. In the drawing, the difference is shown using an NE 110A-i and NE 110A-j. The NE 110A-i is a communication device installed at a distant place relative to the NE 110A-j when viewed from the trade server 700. The delay measurement frames for the NE 110A-i and NE 110A-j are represented by 6201 and 6101, respectively. Further, the signal processing time in the NEs 110A-i and the signal processing time in the 110A-j are represented by 6200 and 6100, respectively. The response signals from the NEs 110A-i and 110A-j to the ME 610A are represented by 6202 and 6102, respectively.

In Step 152 to Step 154 of FIG. 6, the ME 610A measures Ti-2 and Tj-2 for the NEs 10A-i and 10A-j, and the NEs 110A-i and 110A-j can measure the one-way communication delay times Ti-1a and Ti-1a from the ME 610A, respectively. Further, the one-way communication delay time from each of the NEs 110A-i and 110A-j to the ME 610A can be calculated on the ME 610A-side as a difference between Ti-2 and Ti-1b and a difference between Tj-2 and Tj-1b.

In allowable delay amount pre-setting S155 in the trade server 700, the delay time from each of the NEs 110A-i and 110A-j is obtained, and the NE 110A (NE 110A-i in this case) with the longest communication time is regarded as a standard, so that the allowable delay time is set to be the maximum delay time or longer. Accordingly, unfairness between the users caused by the difference of the distance between each user terminal 501 and the trade server 700 is avoided. The time required for communications to be referred to at this time is the two-way communication time (Ti-2 and Tj-2) from the ME 610A to the NE 110A. While the trade server distributes information, the trade server associates the identifier of the information with the allowable delay time to be recorded thereinto. Specifically, in order to compensate a communication time difference 6530 shown in the drawing, the ME 610 waits for the time corresponding to at least the communication time difference 6530.

Further, the distribution waiting time (the distribution waiting time in each of the trade server 700 and the NE 110A) for the downlink signal is set at the same time. The distribution waiting time is determined by referring to the one-way communication delay time from the ME 610 to the NE 110A in order to eliminate errors of the timing of obtaining information between the users. The one-way communication delay time for the downlink signal is notified to the ME 610 and the trade server 700 after being added to the response notification S105 used when the trade server 700 performs the delay measurement. The trade server 700 extracts the communication delay time (measured by the NE 110A) for the downlink signal from the response notification, and aggregates information of all the NEs 100A connected thereunder, so that the distribution waiting time set at each NE 110A is determined. Specifically, in order to compensate the communication time difference 6530 shown in FIG. 9, the NE 110A-j waits for the time corresponding to at least the communication time difference 6530.

It should be noted that in order to distribute to the user terminal 501 the market information that is changing every minute, it is necessary to realize a system in which the delay time can be suppressed to a certain value or smaller and a user referring to the market information can be given time to make reactions (buying and selling of stocks and exchange) to the market. In recent years, commercial trading via the Internet has been becoming more popular, and it is usually the case that users are asked to understand the possibility that trade prices may vary and the buying timing may be different from the selling timing, in consideration of the communication delay. However, shortening a period of time from when a user refers to the market information to when the reaction is completed (for example, trade is completed) is an essential condition for a user who uses the market in more real time. In order to expand the effective time, it is necessary to consider not only the update intervals of the market information of the trade server 700 but also the update intervals of the market information (specifically, trade information at other areas sent from the central trade servers 800A and 800Z) input from the outside to the trade server 700.

As one method, the two-way communication time between the ME 610 and the user terminal 501 (NE 110A) is set within the two-way communication time between the ME 610A and ME 610Z. The two-way communication time between the ME 610A and ME 610Z can be regarded as the processing time necessary to aggregate the responses from other areas for market information transmitted from the central trade server 800A to other areas. If information services from the central trade server 800 to users in the other areas and the local area are assumed, responses (specifically, information that is aggregated in the trade server 700 and input into the central trade server 800) from the users in the local area and responses (aggregated in the remote data center) from other areas are simultaneously accepted, and the responses are sequentially processed in accordance with the priority (user priority, service priority, and response time) of each response, so that fairness can be secured.

On the other hand, if a response to trade information transmitted from other areas is assumed, it is necessary to consider the one-way communication delay time (T1-0 to T1-1a and T1-1b to T1-2) between the central trade servers and trade information distribution intervals 6550 and 6560 of the central trade servers in respective areas. Specifically, if an action for the previously-distributed trade information is not completed within the trade information distribution interval 6560, the conditions of the target market are largely changed, and there is a possibility of suffering an enormous loss in some cases. As described above, in the case of trade via the Internet, it is virtually impossible to always perfectly respond in real time to the market that is always changing. Thus, it is inevitably necessary to swiftly follow the changes in the market to reduce a difference in speculations in the trade by users or financial institutions. In this case, if the trade information distributed from the ME 610Z is assumed to be always the newest one, the central trade server 800A and the trade server 700 need to aggregate response signals transmitted by the trade server 700 and the user terminal 501 thereunder and to input the response signals into the central trade server 800Z in the remote data center 800Z within the total time of the one-way communication delay time (T1-1b to T1-2) from the ME 610Z of the remote server calculated by the ME 610A and the trade information distribution interval 6560 from the ME 610Z to the ME 610A. Specifically, the total of the two-way delay time between the trade server 700 and the user terminal 501 and the arrival time (T1-0 to T1-1a or T2-0 to T2-1a) of the action notified from the ME 610A to the ME 610Z is set to be within the total time of the one-way communication delay time (T1-1b to T1-2) from the ME 610Z of the remote server and the trade information distribution interval 6560 from the ME 610Z to the ME 610A. In practice, in order to perform an appropriate process in the remote central trade server 800Z in response to the entries from other areas, it is desirable to return a response from the central trade server 800A to the central trade server 800Z in time shorter than 6560.

It should be noted that the processing order in the central trade server on the reception side is determined using the signal transmission time from each of the NEs 110A that are nearest to the user terminals 501 and each of the trade servers 700 that bundle the NEs 110A as an important parameter at the time of determining the priority.

Hereinafter, an example of a frame configuration used in FIG. 7 to FIG. 8 will be described.

With reference to FIG. 10, a signal configuration of a delay measurement frame used when the trade server 700 measures the communication time with the user terminal 501 (Step 151 of FIG. 6) will be described. In order to provide the ME 630 with a delay measurement function in the embodiment, the role of the delay measurement frame transmitted by the trade server 700 is to notify the ME 630 of starting of the measurement.

FIG. 10 shows a configuration of a delay measurement frame based on an Ethernet frame. The left side of FIG. 10 represents the front of the frame, and the right side represents the rear thereof. If the frame reaches the communication device, the frame is processed from the left-end bit in order. A synchronization pattern 2000 is given to the front of the delay measurement frame to recognize the arrival of the frame at an interface of the communication device to be downloaded. The synchronization pattern 2000 generally includes two kinds of signal patterns such as a preamble 2100 and a delimiter 2200.

An Ethernet frame 3000 includes a destination address DA 3100 for indicating the destination of the frame in the same domain, a sender address SA 3200 of the frame, and an error check field (Cyclic Redundancy Check (CRC) or Forward Error Correction (FEC) 3700 for confirming (or further correcting) frame information (bit) errors during transmission. Further, a Virtual Local Area Network (VLAN) tag can be included in the Ethernet frame to realize division of a logical Ethernet domain. In recent years, almost all communication networks or business networks have employed the VLAN tag. One or plural continuous VLAN tags can be inserted into the frame. A general usage method of such VLAN tags is shown by VLAN tags 3400A to 3400N. An Ethernet type (TYPE) field 3300 is used as an identifier for determining the type (protocol type, or presence or absence of the VLAN tag) of a signal added to the remaining frame space except for the DA 3100 and SA 3200 as the basic configuration of the Ethernet.

In FIG. 10, as a configuration of a delay measurement signal using the Ethernet frame, information relevant to the delay measurement is added to a payload 3500 of the Ethernet. In FIG. 10, delay measurement information 3600 is inserted into a part of the payload 3500. The delay measurement information 3600 can be divided into an embedded header 3610 and a data payload 3620. The embedded header 3610 includes an additional header length field 3611 for indicating the length (namely, the start position of the data payload 3620) of the header 3610, a time stamp A3612 for inserting the measurement start time, a time stamp B3613 for inserting the two-way communication time into the response signal S103, a path identifier 3614 for indicating a path targeted in the delay measurement, and a user identifier 3615 for identifying the user terminal 501 (or the NE 110A) as a measurement target.

As described in the explanation for the sequences of FIG. 6 to FIG. 8, any one of the methods using the path identifier 3614 and not using the same can be applied. In the latter case, the frame may be configured to omit the path identifier 3614. Further, different identifiers are used for the user identifiers depending on a case targeting all the user terminals (all the NEs 110A), a case targeting plural user terminals (NEs 110A), and a case targeting specific user terminals (NEs 110A).

In FIG. 6, the ME 630 is allowed to have a function of determining start or completion of the delay measurement. Therefore, the value of the time stamp A3612 is inserted at the time of transmitting the frame from the ME 630. The NE 110A monitors the arrival time of the frame to be compared with the value of the time stamp A, and then the time required for communications in the outward path (ME 630 → NE 110A) is calculated to be written into the time stamp B3613, so that the frame is transmitted to the ME 630 as the response signal S103. It should be noted that a signal identifier 3616 is used to identify whether the signal is a delay measurement signal (outward path) or a response signal (homeward path). Further, the signal identifier 3616 is used to identify whether the signal is of a measurement start instruction issued to the ME 630 from the trade server 700 or of a measurement result notification issued to the trade server 700 from the ME 630.

As another embodiment (frame configuration method) to instruct the ME 630 to start the delay measurement, the trade server 700 transmits only the necessary information of the fields shown in FIG. 10 to the ME 630, and the frame shown in FIG. 10 may be configured again at the ME 630. The same effect can be obtained in the both cases. The information necessary to be notified from the trade server 700 to the ME 630 includes the path identifier 3614, the user identifier 3615, and the signal identifier 3616. When transmitting these pieces of information, it is necessary to give the additional header length 3611.

The device configuring the frame of FIG. 10 may be the trade server 700 or the ME 630. However, a frame identifier for showing that the frame is a delay measurement frame in accordance with the configuration is needed. In the configuration example of FIG. 10 based on the Ethernet frame, the VLAN tag 3400N inserted immediately before the delay measurement frame is used for the frame identification.

The delay measurement signal of FIG. 10 has a basic signal configuration that can be similarly used for the sequences (S552 and S555) of FIG. 8 by which the delay measurement is performed between the central trade servers 800A and 800Z.

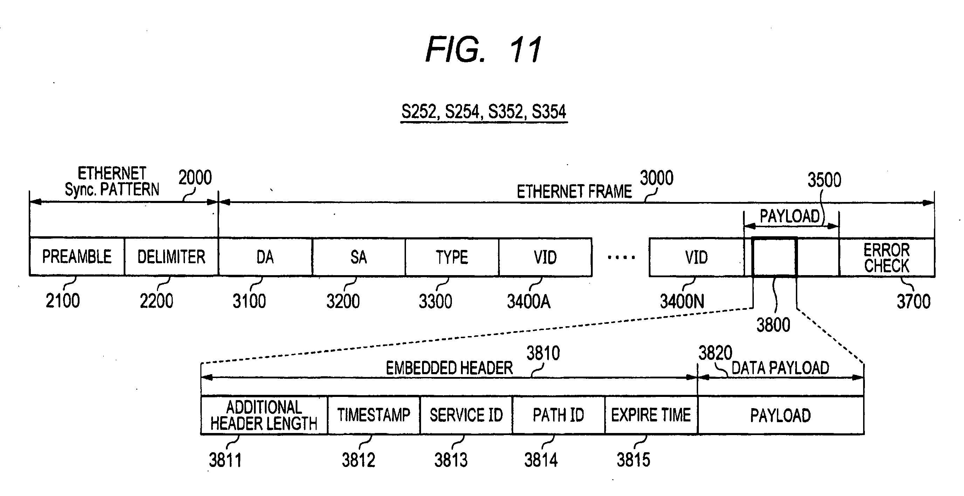

With reference to FIG. 11, a configuration of a downlink signal by which the waiting time at the time of information distribution or the allowable delay time for a response to the distributed information is notified to the trade server 700 or the NE 110A will be described. This signal configuration is applied to the downlink signals S352 and S354 of FIG. 6. The signal configuration other than notification information 3800 written into the inside of the payload 3500 is similar to that of FIG. 10.

The notification information 3800 includes an embedded header 3810 and a data payload 3820. Further, the notification information 3800 includes an additional header length 3811 showing the amount of information of the embedded header 3810. The embedded header 3810 includes a time stamp 3812 for notifying the trade server 700 or the NE 110A of the information distribution time at the time of transmitting the downlink signal, a service identifier 3813 for identifying the type of a service (data/contents) for which the distribution time is designated, a path identifier 3814 for identifying a path through which the downlink frame passes, and an expire time 3815 for designating the distribution expire time of a service (data/contents) distributed using the downlink signal. The frame arriving at the trade server 700 or NE 110A after the expire time 3815 is not transferred to the user terminal 501 to wait for distribution of the next available data/contents.

In the embodiment, the signal configuration of FIG. 11 is also applied to valid/invalid determination of reception of a response signal from a user for information distributed from the central trade server 800 or the trade server 700 to the user terminal 501. Specifically, the signal configuration of FIG. 11 is also applied when the allowable delay time of the response signal is notified to the trade server 700 or the NE 110A (S252 and S254). The communication delay time preliminarily measured between the central trade servers 800A and 800Z is referred to, and the communication time between the central trade server 800 and the trade server 700, the communication time between the trade server 700 and the user terminal 501 (NE 110A), and the communication time between the central trade server 800 and the user terminal 501 (NE 110A) are calculated as described in FIG. 9. On the basis of the calculation result and measurement result of the communication time between the trade server 700 and the user terminal 501 (NE 110A), the expansion (transfer) time of disclosure information is transmitted to the trade server 700 and/or NE 110A so that the disclosure information transmitted from the trade server 800 arrives at the all user terminals 501 at the same time. The expire time field 3815 indicates the available time of the information. The information (that can be identified using the information identifier) arriving at the trade server 700 or the NE 110A after the expire time of the information is not transferred towards the user terminal 501 thereafter, but is discarded at each device that has confirmed the frame as expired.

With reference to FIG. 12, a signal format configuring the delay measurement signal of FIG. 10 and the expire time notification signal of FIG. 11 using an Ethernet frame format will be described. In FIG. 12, the signal information included in the signal format is the same as that of FIG. 10 or FIG. 11. Accordingly, the correspondence relations between FIG. 10 and FIGS. 11 and 12 will be particularly described.

In FIG. 12, a part of information shown in the signal configurations of FIG. 10 and FIG. 11 is represented by using a VLAN tag 3900 of the Ethernet frame. The VLAN tag 3900 includes a TPID 3910, a Priority 3920, a CFI 3930, and a VID 3940. Further, information 4000 inserted into the payload of FIG. 12A includes a header length 4100, a time stamp 4200, an information identifier 4300, and an expire time 4400.

The VID 3940 can be used for identifying a communication path. Thus, the VID 3940 is used in the format instead of the path identifier 3814 of FIG. 11. It should be noted that if there is necessary information other than information to be included in the header 3810 in the delay measurement, a space into which the necessary information can be inserted is prepared in the payload 3820 of FIG. 11. However, the space can be omitted. An example of a frame configuration including no payload 3820 is shown in FIG. 12. It is obvious that even in the case where the Ethernet frame is used, an expanded header space corresponding to the payload 3820 can be secured (this is apparent from the above explanation, and thus is not illustrated again).

FIG. 12 (b) shows a signal format for realizing the signal configuration of FIG. 10 using the Ethernet frame. The concepts of a time stamp A4201, a time stamp B4202, an information identifier 4301, and a user identifier 4401 are the same as those of FIG. 10. A VID 3940 is used instead of the path identifier 3614 of FIG. 10. Further, a TPID field 3910 in the VLAN tag 3900 is used instead of the signal identifier 3616.

With reference to FIG. 13, a signal format configuring the delay measurement signal of FIG. 10 and the expire time notification signal of FIG. 11 using an MPLS frame format will be described. In FIG. 13, the signal information included in the signal format is the same as that of FIG. 10 or FIG. 11. Accordingly, the correspondence relations between FIG. 10 and FIGS. 11 and 13 will be particularly described.

In FIG. 13, a part of information shown in the signal configuration of FIG. 10 is represented by using SIM headers 6100A to 6100N of the MPLS frame. The SIM header 6100N includes a label 6110, a service class 6120, an S-bit 6130, and a Time To Live (TTL) 6140. The information inserted into a payload 6200 of the format is the same as that of FIG. 12. Specifically, FIG. 13 shows a state in which a header 6300 is inserted into the payload 6200 of the MPLS frame. The header 6300 includes a time stamp, an information identifier, and an expire time.

The SIM headers 6100 can be used for identifying a communication path. Thus, the label 6110 is used in the format instead of the path identifier 3814 of FIG. 11. It should be noted that if there is necessary information other than information to be included in the header 3810 in the delay measurement, a space into which the necessary information can be inserted is prepared in the payload 3820 of FIG. 11. However, the space can be omitted. A frame configuration including no payload 3820 is shown in FIG. 13 as similar to FIG. 12. It is obvious that even in the case where the Ethernet frame is used, an expanded header space corresponding to the payload 3820 can be secured (this case is apparent from the above explanation, and thus is not illustrated again).

The signal configuration of the header 6300 for realizing the signal configuration of FIG. 10 using the MPLS frame is the same as that of FIG. 12 (b).

## Claims

1. A communication system (1) that configures a communication path connecting an information distribution device (700, 800) to an information reception terminal (501) via a communication network (100, 200, 300) and distributes information from the information distribution device to the information reception terminal using the communication path, the communication system comprising an information management device (610, 620, 630) on the communication path connecting the information distribution device to the information reception terminal,
wherein the information distribution device (700, 800) has a function of determining the transfer time at which the information which is to be distributed by the information management device (610, 620, 630) is to be transferred to the information reception terminal (501) and a function of notifying the information management device of the transfer time;
the information management device (610, 620, 630) has a function of holding the information which is transmitted by the information distribution device (700, 800), a function of identifying the transfer time at which the information is to be distributed to the information reception terminal (501), and a function of starting transfer of the information to the information reception terminal in accordance with the transfer time; and
the information distribution device (700, 800) has a function of providing the information held in said information distribution device (700, 800) to a second information distribution device (700, 800) that belongs to a second communication system (1), a function of notifying the second information distribution device of information update intervals of the information distribution device, a function of measuring the time required for communications with the second information distribution device, and a function of obtaining information update time intervals of the second information distribution device.

2. The communication system according to claim 1, wherein a communication device configuring the information distribution device, the communication network, and the communication path has a function of holding in the device the standard time common in the communication system or in the world, a function of temporarily holding input communication signals in the device, and a function of determining whether or not it is time to start a process of the communication signals by the communication device, on the basis of the standard time.

3. The communication system according to claim 1 or 2, further comprising a third information distribution device (700, 800) mutually connected to said information distribution device,
wherein the third information distribution device has a function of distributing information to the information reception terminal (501), a function of holding the information, a function of distributing information to said information distribution device (700, 800), and a function of holding the information; and
the third information distribution device is located on the communication path connecting said information distribution device holding the information to be transmitted to the reception terminal, and has an information communication function to operate as one of the communication devices configuring the path.

4. The communication system according to claims 1 to 3, further comprising an information management device (610, 620, 630) mutually connected to the information reception terminal and the third information distribution device (700, 800),
wherein the information management device has a function of distributing and transferring information to the information reception terminal (501), a function of holding the information to be distributed, a function of distributing information to the third information distribution device, and a function of holding the information; and
the information management device is located on the communication path connecting the first or third information distribution device holding information to be transmitted to the reception terminal, and has an information distribution function to operate as one of the communication devices configuring the communication path.

5. The communication system according to any one of claims 1 to 4,
wherein the third information distribution device (700, 800) has a function of measuring the time required for communications with the information reception terminal (501) connected to the third information distribution device, a function of determining the process start time of information distributed by the third information distribution device or the waiting time until the process is started in the information management device on the basis of the time required for communications with the information reception terminal, and a function of notifying the information reception terminal of the process start time or the process waiting time.

6. The communication system according to any one of claims 1 to 5,
wherein said information distribution device (700, 800) has a function of storing the time required for communications with the second information distribution device measured by said information distribution device as the standard delay time, a function of calculating the allowable delay time in communications with the information reception terminal or the information management device on the basis of the standard delay time, and a function of adjusting the allowable delay time to be shorter than the standard delay time.

7. The communication system according to any one of claims 1 to 6,
wherein said information distribution device (700, 800) has a function of storing the information update time intervals of the second information distribution device ()700, 800 obtained by said information distribution device as the standard update time, a function of calculating the allowable delay time in communication with the information reception terminal (501) or the information management device (610, 620, 630) on the basis of the standard update time, and a function of adjusting the allowable delay time to be shorter than the standard update time.

8. The communication system according to any one of claims 1 to 7,
wherein in the case where an uplink signal transmitted to said information distribution device (700, 800) or the third information distribution device (700, 800) is received from the information reception terminal (501), the information management device (610, 620, 630) has a function of recording the time of receiving the uplink signal into the information management device and a function of inserting the reception time into a part of the uplink signal.

9. The communication system according to any one of claims 1 to 8,
wherein a downlink signal transmitted from said information distribution device (700, 800) to the reception terminal (501) includes an information identifier for identifying the type of information included in the downlink signal, and the process start time or the waiting time information.

10. The communication system according to claim 9,
wherein the downlink signal transmitted from said information distribution device (700, 800) to the reception terminal (501) further includes a path identifier for identifying a communication path through which the downlink signal passes.

11. The communication system according to any one of claims 1 to 10,
wherein the downlink signal transmitted from said information distribution device (700, 800) to the reception terminal (501) further includes the expire time of information included in the downlink signal or a response deadline for the information.

12. The communication system according to any one of claims 1 to 11,
wherein in the case where an uplink signal transmitted to said information distribution device (700, 800) or the third information distribution device (700, 800) is received from the information reception terminal (501), the information management device (610, 620, 630) has a function of comparing the time of receiving the uplink signal with information recorded into the information management device and a function of inserting the reception time into a part of the uplink signal.

13. The communication system according to any one of claims 1 to 12,
wherein in the case where an uplink signal frame transmitted to said information distribution device (700, 800) or the third information distribution device (700, 800) is received from the information reception terminal (501), the information management device (610, 620, 630) has a function of confirming the expire time of a service targeted by a signal included in the uplink signal and a function of notifying the device transmitting the uplink signal frame of invalidity of the service identifier if the expire time of the service is past or if the service identifier is not registered in the information management device.

14. The communication system according to any one of claims 1 to 13,
wherein in the case where a downlink signal transmitted to the information reception terminal (501) is received from said information distribution device (700, 800) or the third information distribution device (700, 800), the information management device (610, 620, 630) has a function of confirming the expire time of a signal included in the uplink signal and a function of selecting whether or not to stop transferring the frame if the reception time of the frame is past the expire time of the service.

## Patentansprüche

1. Kommunikationssystem (1), das einen Kommunikationsweg einrichtet, der ein Informationsverteilungsgerät (700, 800) über ein Kommunikationsnetz (100, 200, 300) mit einem Informationsempfangsterminal (501) verbindet, und unter Verwendung des Kommunikationswegs Informationen vom Informationsverteilungsgerät zum Informationsempfangsterminal verteilt, wobei das Kommunikationssystem auf dem das Informationsverteilungsgerät mit dem Informationsempfangsterminal verbindenden Kommunikationsweg ein Informationsverwaltungsgerät (610, 620, 630) umfasst,
wobei das Informationsverteilungsgerät (700, 800) eine Funktion zum Bestimmen der Übertragungszeit, zu der die Information, die vom Informationsverwaltungsgerät (610, 620, 630) zu verteilen ist, zum Informationsempfangsterminal (501) übertragen werden soll, und eine Funktion zum Mitteilen der Übertragungszeit an das Informationsverwaltungsgerät aufweist,
das Informationsverwaltungsgerät (610, 620, 630) eine Funktion zum Halten der vom Informationsverteilungsgerät (700, 800) ausgesandten Information, eine Funktion zum Bestimmen der Übertragungszeit, zu der die Information an das Informationsempfangsterminal (501) geliefert werden soll, und eine Funktion zum Starten der Übertragung der Information an das Informationsempfangsterminal entsprechend der Übertragungszeit aufweist, und
das Informationsverteilungsgerät (700, 800) eine Funktion zum Liefern der im Informationsverteilungsgerät (700, 800) gehaltenen Information an ein zweites Informationsverteilungsgerät (700, 800), das zu einem zweiten Kommunikationssystem (1) gehört, eine Funktion zum Mitteilen von Informationsaktualisierungs-Intervallen des Informationsverteilungsgeräts an das zweite Informationsverteilungsgerät, eine Funktion zum Messen der für die Kommunikation mit dem zweiten Informationsverteilungsgerät benötigten Zeit und eine Funktion zum Gewinnen von Informationsaktualisierungs-Zeitintervallen für das zweite Informationsverteilungsgerät aufweist.

2. Kommunikationssystem nach Anspruch 1,
wobei ein Kommunikationsgerät, das das Informationsverteilungsgerät bildet, das Kommunikationsnetz und der Kommunikationsweg eine Funktion, um im Gerät die Standardzeit zu halten, die im Kommunikationssystem oder in der Welt allgemein gilt, sowie eine Funktion, um eingehende Kommunikationssignale vorübergehend zu halten, und eine Funktion aufweisen, um aufgrund der Standardzeit zu bestimmen, ob die Zeit zum Starten einer Verarbeitung der Kommunikationssignale durch das Kommunikationsgerät gekommen ist.

3. Kommunikationssystem nach Anspruch 1 oder 2 mit einem dritten Informationsverteilungsgerät (700, 800), das mit dem Informationsverteilungsgerät gemeinsam verbunden ist,
wobei das dritte Informationsverteilungsgerät eine Funktion zum Verteilen von Informationen an das Informationsempfangsterminal (501) eine Funktion zum Halten der Informationen, eine Funktion zum Verteilen von Informationen an das Informationsverteilungsgerät (700, 800) und eine Funktion zum Halten der Informationen aufweist, und
das dritte Informationsverteilungsgerät auf dem Kommunikationsweg angeordnet ist, der das Informationsverteilungsgerät, das die zu übertragenden Informationen hält, mit dem Empfangsterminal verbindet, und eine Informationskommunikationsfunktion zum Betrieb als eines der den Weg bildenden Kommunikationsgeräte aufweist.

4. Kommunikationssystem nach den Ansprüchen 1 bis 3 mit einem Informationsverwaltungsgerät (610, 620, 630), das mit dem Informationsempfangsterminal und dem dritten Informationsverteilungsgerät (700, 800) verbunden ist,
wobei das Informationsverwaltungsgerät eine Funktion zum Verteilen und Übertragen einer Information an das Informationsempfangsterminal (501), eine Funktion zum Halten der zu verteilenden Information, eine Funktion zum Liefern einer Information an das dritte Informationsverteilungsgerät und eine Funktion zum Halten der Information aufweist, und
das Informationsverwaltungsgerät auf dem Kommunikationsweg angeordnet ist, der das erste oder das dritte Informationsverteilungsgerät, das eine zu übertragende Information hält, mit dem Empfangsterminal verbindet, und eine Informationsverteilungsfunktion zum Betrieb als eines der den Kommunikationsweg bildenden Kommunikationsgeräte aufweist.

5. Kommunikationssystem nach einem der Ansprüche 1 bis 4, wobei das dritte Informationsverteilungsgerät (700, 800) eine Funktion zum Messen der Zeit, die zur Kommunikation mit dem mit dem dritten Informationsverteilungsgerät verbundenen Informationsempfangsterminal (501) benötigt wird, eine Funktion zum Bestimmen der Verarbeitungsstartzeit für eine vom dritten Informationsverteilungsgerät gelieferte Information oder der Wartezeit bis die Verarbeitung im Informationsverwaltungsgerät begonnen wird, auf der Grundlage der zur Kommunikation mit dem Informationsempfangsterminal benötigten Zeit und eine Funktion zum Mitteilen der Verarbeitungsstartzeit oder der Verarbeitungswartezeit an das Informationsempfangsterminal aufweist.

6. Kommunikationssystem nach einem der Ansprüche 1 bis 5,
wobei das Informationsverteilungsgerät (700, 800) eine Funktion zum Speichern der zur Kommunikation mit dem zweiten Informationsverteilungsgerät benötigten Zeit, die vom Informationsverteilungsgerät gemessen wird, als Standardverzögerungszeit, eine Funktion zum Berechnen der erlaubten Verzögerungszeit bei der Kommunikation mit dem Informationsempfangsterminal oder dem Informationsverwaltungsgerät auf der Grundlage der Standardverzögerungszeit und eine Funktion zum Einstellen der erlaubten Verzögerungszeit, so dass sie kürzer als die Standardverzögerungszeit ist, aufweist.

7. Kommunikationssystem nach einem der Ansprüche 1 bis 6,
wobei das Informationsverteilungsgerät (700, 800) eine Funktion zum Speichern der Informationsaktualisierungs-Zeitintervalle des zweiten Informationsverteilungsgeräts (700, 800), die durch das Informationsverteilungsgerät gewonnen werden, als Standardaktualisierungszeit, eine Funktion zum Berechnen der erlaubten Verzögerungszeit bei der Kommunikation mit dem Informationsempfangsterminal (501) oder dem Informationsverwaltungsgerät (610, 620, 630) auf der Grundlage der Standardaktualisierungszeit und eine Funktion zum Einstellen der erlaubten Verzögerungszeit, so dass sie kürzer als die Standardaktualisierungszeit ist, aufweist.

8. Kommunikationssystem nach einem der Ansprüche 1 bis 7,
wobei dann, wenn vom Informationsempfangsterminal (501) her ein Uplink-Signal empfangen wird, das zum Informationsverteilungsgerät (700, 800) oder dem dritten Informationsverteilungsgerät (700, 800) übertragen wird, das Informationsverwaltungsgerät (610, 620, 630) eine Funktion zum Aufzeichnen der Zeit des Empfangs des Uplink-Signals im Informationsverwaltungsgerät und eine Funktion zum Einfügen der Empfangszeit in einen Teil des Uplink-Signals aufweist.

9. Kommunikationssystem nach einem der Ansprüche 1 bis 8,
wobei ein Downlink-Signal, das vom Informationsverteilungsgerät (700, 800) zum Empfangsterminal (501) übertragen wird, eine Informationsidentifizierung zum Identifizieren der Art der im Downlink-Signal enthaltenen Information sowie die Verarbeitungsstartzeit oder die Wartezeitinformation enthält.

10. Kommunikationssystem nach Anspruch 9,
wobei das vom Informationsverteilungsgerät (700, 800) zum Empfangsterminal (501) übertragene Downlink-Signal außerdem eine Wegidentifizierung zum Identifizieren eines Kommunikationswegs enthält, den das Downlink-Signal durchläuft.

11. Kommunikationssystem nach einem der Ansprüche 1 bis 10,
wobei das vom Informationsverteilungsgerät (700, 800) zum Empfangsterminal (501) übertragene Downlink-Signal außerdem die Ablaufzeit einer im Downlink-Signal enthaltenen Information oder eine Antwortfrist zu der Information enthält.

12. Kommunikationssystem nach einem der Ansprüche 1 bis 11,
wobei dann, wenn vom Informationsempfangsterminal (501) her ein Uplink-Signal empfangen wird, das zum Informationsverteilungsgerät (700, 800) oder dem dritten Informationsverteilungsgerät (700, 800) übertragen wird, das Informationsverwaltungsgerät (610, 620, 630) eine Funktion zum Vergleich der Zeit des Empfangs des Uplink-Signals mit einer im Informationsverwaltungsgerät aufgezeichneten Information und eine Funktion zum Einfügen der Empfangszeit in einen Teil des Uplink-Signals aufweist.

13. Kommunikationssystem nach einem der Ansprüche 1 bis 12,
wobei dann, wenn vom Informationsempfangsterminal (501) her ein Uplink-Signalrahmen empfangen wird, der zum Informationsverteilungsgerät (700, 800) oder dem dritten Informationsverteilungsgerät (700, 800) übertragen wird, das Informationsverwaltungsgerät (610, 620, 630) eine Funktion zum Bestätigen der Ablaufzeit eines Dienstes, auf den ein im Uplink-Signal enthaltenes Signal abzielt, und eine Funktion zum Mitteilen der Ungültigkeit der Identifizierung des Dienstes, wenn die Ablaufzeit des Dienstes in der Vergangenheit liegt oder die Identifizierung des Dienstes nicht im Informationsverwaltungsgerät verzeichnet ist, aufweist.

14. Kommunikationssystem nach einem der Ansprüche 1 bis 13,
wobei dann, wenn vom Informationsverteilungsgerät (700, 800) oder dem dritten Informationsverteilungsgerät (700, 800) her ein Downlink-Signal empfangen wird, das zum Informationsempfangsterminal (501) übertragen wird, das Informationsverwaltungsgerät (610, 620, 630) eine Funktion zum Bestätigen der Ablaufzeit eines im Uplink-Signal enthaltenen Signals und eine Funktion zum Wählen, ob ein Übertragen des Rahmens beendet wird, wenn die Empfangszeit des Rahmens nach der Ablaufzeit des entsprechenden Dienstes liegt, aufweist.

## Revendications

1. Système de communication (1) qui configure un trajet de communication reliant un dispositif de diffusion d'informations (700, 800) à un terminal de réception d'informations (501) par l'intermédiaire d'un réseau de communication (100, 200, 300) et diffuse des informations à partir du dispositif de diffusion d'informations au terminal de réception d'informations en utilisant le trajet de communication, le système de communication comportant un dispositif de gestion d'informations (610, 620, 630) sur le trajet de communication reliant le dispositif de diffusion d'informations au terminal de réception d'informations,
dans lequel le dispositif de diffusion d'informations (700, 800) dispose d'une fonction pour déterminer l'heure de transfert à laquelle les informations qui doivent être diffusées par le dispositif de gestion d'informations (610, 620, 630) doivent être transférées au terminal de réception d'informations (501) et d'une fonction pour notifier l'heure de transfert au dispositif de gestion d'informations,
le dispositif de gestion d'informations (610, 620, 630) dispose d'une fonction pour conserver les informations qui sont transmises par le dispositif de diffusion d'informations (700, 800), d'une fonction pour identifier l'heure de transfert à laquelle les informations doivent être diffusées au terminal de réception d'informations (501), et d'une fonction pour débuter le transfert des informations vers le terminal de réception d'informations conformément à l'heure de transfert,letdispositif de diffusion d'informations (700, 800) dispose d'une fonction pour fournir les informations conservées dans ledit dispositif de diffusion d'informations (700, 800) à un deuxième dispositif de diffusion d'informations (700, 800) qui appartient à un second système de communication (1), d'une fonction pour notifier au deuxième dispositif de diffusion d'informations des intervalles entre les mises à jour d'informations du dispositif de diffusion d'informations, d'une fonction pour mesurer le temps nécessaire pour des communications avec le deuxième dispositif de diffusion d'informations, et d'une fonction pour obtenir des intervalles de temps entre les mises à jour d'informations du deuxième dispositif de diffusion d'informations.

2. Système de communication selon la revendication 1,
dans lequel un dispositif de communication configurant le dispositif de diffusion d'informations, le réseau de communication, et le trajet de communication dispose d'une fonction pour conserver dans le dispositif l'heure standard commune dans le système de communication ou dans le monde, d'une fonction pour conserver temporairement des signaux de communication d'entrée dans le dispositif, et d'une fonction pour déterminer si oui ou non il est l'heure de débuter un processus des signaux de communication par l'intermédiaire du dispositif de communication, sur la base de l'heure standard.

3. Système de communication selon la revendication 1 ou 2, comportant en outre un troisième dispositif de diffusion d'informations (700, 800) mutuellement relié audit dispositif de diffusion d'informations, dans lequel le troisième dispositif de diffusion d'informations dispose d'une fonction pour diffuser des informations au terminal de réception d'informations (501), d'une fonction pour conserver les informations, d'une fonction pour diffuser des informations audit dispositif de diffusion d'informations (700, 800), et d'une fonction pour conserver les informations, et
le troisième dispositif de diffusion d'informations est positionné sur le trajet de communication reliant ledit dispositif de diffusion d'informations conservant les informations à transmettre au terminal de réception, et dispose d'une fonction de communication d'informations pour fonctionner comme l'un des dispositifs de communication configurant le trajet.

4. Système de communication selon les revendications 1 à 3, comportant en outre un dispositif de gestion d'informations (610 ,620, 630) mutuellement relié au terminal de réception d'informations et au troisième dispositif de diffusion d'informations (700, 800), dans lequel le dispositif de gestion d'informations dispose d'une fonction pour diffuser et transférer des informations au terminal de réception d'informations (501), d'une fonction pour conserver les informations à diffuser, d'une fonction pour diffuser des informations au troisième dispositif de diffusion d'informations, et d'une fonction pour conserver les informations, et le dispositif de gestion d'informations est positionné sur le trajet de communication reliant le premier ou le troisième dispositif de diffusion d'informations conservant des informations à transmettre au terminal de réception, et dispose d'une fonction de diffusion d'informations pour fonctionner comme l'un des dispositifs de communication configurant le trajet de communication.

5. Système de communication selon l'une quelconque des revendications 1 à 4,
dans lequel le troisième dispositif de diffusion d'informations (700, 800) dispose d'une fonction pour mesurer le temps nécessaire pour des communications avec le terminal de réception d'informations (501) relié au troisième dispositif de diffusion d'informations, d'une fonction pour déterminer l'heure de début de processus d'informations diffusées par le troisième dispositif de diffusion d'informations ou le temps d'attente jusqu'à ce que le processus soit démarré dans le dispositif de gestion d'informations sur la base du temps nécessaire pour des communications avec le terminal de réception d'informations, et d'une fonction pour notifier l'heure de début de processus ou le temps d'attente de processus au terminal de réception d'informations.

6. Système de communication selon l'une quelconque des revendications 1 à 5,
dans lequel ledit dispositif de diffusion d'informations (700, 800) dispose d'une fonction pour mémoriser le temps nécessaire pour des communications avec le deuxième dispositif de diffusion d'informations mesurée par ledit dispositif de diffusion d'informations en tant que temps de retard standard, d'une fonction pour calculer le temps de retard admissible dans des communications avec le terminal de réception d'informations ou le dispositif de gestion d'informations sur la base du temps de retard standard, et d'une fonction pour ajuster le temps de retard admissible de manière à ce qu'il soit plus court que le temps de retard standard.

7. Système de communication selon l'une quelconque des revendications 1 à 6,
dans lequel ledit dispositif de diffusion d'informations (700, 800) dispose une fonction pour mémoriser les intervalles de temps entre les mises à jour d'informations du deuxième dispositif de diffusion d'informations (700, 800) obtenus par ledit dispositif de diffusion d'informations en tant que temps de mise à jour standard, d'une fonction pour calculer le temps de retard admissible en communication avec le terminal de réception d'informations (501) ou le dispositif de gestion d'informations (610, 620, 630) sur la base du temps de mise à jour standard, et d'une fonction pour ajuster le temps de retard admissible de manière à ce qu'il soit plus court que le temps de mise à jour standard.

8. Système de communication selon l'une quelconque des revendications 1 à 7,
dans lequel dans le cas où un signal en liaison montante transmis audit dispositif de diffusion d'informations (700, 800) ou au troisième dispositif de diffusion d'informations (700, 800) est reçu en provenance du terminal de réception d'informations (501), le dispositif de gestion d'informations (610, 620, 630) dispose d'une fonction pour enregistrer l'heure de réception du signal en liaison montante dans le dispositif de gestion d'informations et d'une fonction pour insérer l'heure de réception dans une partie du signal en liaison montante.

9. Système de communication selon l'une quelconque des revendications 1 à 8,
dans lequel un signal en liaison descendante transmis par ledit dispositif de diffusion d'informations (700, 800) au terminal de réception (501) comprend un identifiant d'informations pour identifier le type d'informations comprises dans le signal en liaison descendante, et l'heure de début de processus ou les informations de temps d'attente.

10. Système de communication selon la revendication 9,
dans lequel le signal en liaison descendante transmis par ledit dispositif de diffusion d'informations (700, 800) au terminal de réception (501) comprend en outre un identifiant de trajet pour identifier un trajet de communication à travers lequel le signal en liaison descendante passe.

11. Système de communication selon l'une quelconque des revendications 1 à 10,
dans lequel le signal en liaison descendante transmis par ledit dispositif de diffusion d'informations (700, 800) au terminal de réception (501) comprend en outre l'heure d'expiration d'informations comprises dans le signal en liaison descendante ou un délai de réponse pour les informations.

12. Système de communication selon l'une quelconque des revendications 1 à 11,
dans lequel dans le cas où un signal en liaison montante transmis audit dispositif de diffusion d'informations (700, 800) ou au troisième dispositif de diffusion d'informations (700, 800) est reçu en provenance du terminal de réception d'informations (501), le dispositif de gestion d'informations (610, 620, 630) dispose d'une fonction pour comparer l'heure de réception du signal en liaison montante aux informations enregistrées dans le dispositif de gestion d'informations et d'une fonction pour insérer l'heure de réception dans une partie du signal en liaison montante.

13. Système de communication selon l'une quelconque des revendications 1 à 12,
dans lequel dans le cas où une trame de signal en liaison montante transmise audit dispositif de diffusion d'informations (700, 800) ou au troisième dispositif de diffusion d'informations (700, 800) est reçue en provenance du terminal de réception d'informations (501), le dispositif de gestion d'informations (610, 620, 630) dispose d'une fonction pour confirmer l'heure d'expiration d'un service ciblé par un signal compris dans le signal en liaison montante et d'une fonction pour notifier au dispositif transmettant la trame de signal en liaison montante l'invalidité de l'identifiant de service si l'heure d'expiration du service est passée ou si l'identifiant du service n'est pas enregistré dans le dispositif de gestion d'informations.

14. Système de communication selon l'une quelconque des revendications 1 à 13,
dans lequel dans le cas où un signal en liaison descendante transmis au terminal de réception d'informations (501) est reçu en provenance dudit dispositif de diffusion d'informations (700, 800) ou du troisième dispositif de diffusion d'informations (700, 800), le dispositif de gestion d'informations (610, 620, 630) dispose d'une fonction pour confirmer l'heure d'expiration d'un signal compris dans le signal en liaison montante et d'une fonction pour sélectionner s'il faut oui ou non arrêter le transfert de la trame si l'heure de réception de la trame est postérieure à l'heure d'expiration du service.
